(19)

**Europäisches Patentamt**
**European Patent Office**
**Office européen des brevets**

(11) **EP 4 624 980 A1**

(12) **EUROPEAN PATENT APPLICATION**

(43) Date of publication:
**01.10.2025   Bulletin 2025/40**

(21) Application number: **25165999.1**

(22) Date of filing: **25.03.2025**

(51) International Patent Classification (IPC):
*G01S 7/41* (2006.01)     *G01S 13/86* (2006.01)
*G01S 13/931* (2020.01)    *G01S 17/86* (2020.01)
*G01S 17/931* (2020.01)    *G06N 3/045* (2023.01)
*G06N 3/08* (2023.01)      *G06V 10/82* (2022.01)
*G06V 20/58* (2022.01)

(52) Cooperative Patent Classification (CPC):
**G01S 13/931; G01S 7/417; G01S 13/865;
G01S 13/867; G01S 17/86; G01S 17/931;
G06F 18/241; G06F 18/253; G06N 3/044;
G06N 3/045; G06N 3/0464; G06N 3/047;
G06N 3/08; G06N 3/084; G06N 3/088;**     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2024   US 202418620988**

(71) Applicant: **Waymo LLC
Mountain View, CA 94043 (US)**

(72) Inventors:
• **OUYANG, Yu**
  **Mountain View, 94043 (US)**
• **HO, Daniel**
  **Mountain View, 94043 (US)**

• **WANG, Yang**
  **Mountain View, 94043 (US)**
• **THORSEN, Justin**
  **Mountain View, 94043 (US)**
• **WU, Shangxuan**
  **Mountain View, 94043 (US)**
• **HUANG, Di**
  **Mountain View, 94043 (US)**
• **HOU, Jingxuan**
  **Mountain View, 94043 (US)**
• **YU, Ruichi**
  **Mountain View, 94043 (US)**

(74) Representative: **Chettle, John Edward et al
Venner Shipley LLP
200 Aldersgate
London EC1A 4HD (GB)**

(54) **END-TO-END DETECTION OF REDUCED DRIVABILITY AREAS IN AUTONOMOUS VEHICLE APPLICATIONS**

(57)   The disclosed systems and techniques facilitate efficient detection and classification of traffic signs in driving environments. The disclosed techniques include, obtaining, using a sensing system of a vehicle, a set of camera images, a set of radar images, and a set of lidar images of an environment. The techniques further include generating, using a first neural network (NN), camera feature(s) characterizing the camera images, generating, using a second NN, radar features characterizing the radar images, and generating, using a third NN, lidar feature(s) characterizing the lidar images. The techniques further include processing the camera feature(s), the radar feature(s), and the lidar feature(s) to obtain an indication of a reduced drivability area in the environment.

FIG. 3A

EP 4 624 980 A1

(52) Cooperative Patent Classification (CPC): (Cont.)
 **G06N 3/09; G06N 5/01; G06V 10/82; G06V 20/58**

**Description**

**TECHNICAL FIELD**

The instant specification generally relates to autonomous vehicles. More specifically, the instant specification relates to detection of areas that have reduced drivability, including closed-off lanes, emergency scenes, construction zones, and the like.

**BACKGROUND**

An autonomous (fully or partially self-driving) vehicle (AV) operates by sensing an outside environment with various electromagnetic (e.g., radar and optical) and non-electromagnetic (e.g., audio and humidity) sensors. Some autonomous vehicles chart a driving path through the environment based on the sensed data. The driving path can be determined based on Global Positioning System (GPS) data and road map data. While the GPS and the road map data can provide information about static aspects of the environment (buildings, street layouts, road closures, etc.), dynamic information (such as information about other vehicles, pedestrians, streetlights, etc.) is obtained from contemporaneously collected sensing data. Precision and safety of the driving path and of the speed regime selected by the autonomous vehicle depend on timely and accurate identification of various objects present in the outside environment and on the ability of a driving algorithm to process the information about the environment and to provide correct instructions to the vehicle controls and the drivetrain.

**BRIEF DESCRIPTION OF THE DRAWINGS**

The present disclosure is illustrated by way of examples, and not by way of limitation, and can be more fully understood with references to the following detailed description when considered in connection with the figures, in which:

　　**FIG. 1** is a diagram illustrating components of an example vehicle capable of deploying an and-to-end (E2E) perception model for reduced drivability area (RDA) detection and navigation, in accordance with some implementations of the present disclosure, in accordance with some implementations of the present disclosure.
　　**FIG. 2** is a diagram illustrating an example system architecture that can be used for training and deployment of an E2E perception model capable of detection of RDAs in driving environments, in accordance with some implementations of the present disclosure.
　　**FIGs. 3A-3B** illustrate example operations of an E2E perception model capable of efficient identification and navigation of RDAs in driving environments, in accordance with some implementations of the present disclosure. **FIG. 3A** illustrates a first portion of RDA detection model operations that includes individual processing of camera images, radar images, and lidar images. **FIG. 3B** illustrates a second portion of RDA detection model operations that includes processing of combined camera, radar, and lidar features.
　　**FIG. 4** is a schematic illustration of an example driving environment of a vehicle that deploys an RDA detection model for identification of undrivable areas, in accordance with some implementations of the present disclosure.
　　**FIG. 5** illustrates example architecture of another E2E perception model capable of identifying restricted drivability areas and predicting trajectories of an autonomous vehicle in driving environments, in accordance with some implementations of the present disclosure.
　　**FIG. 6** illustrates an example architecture of a multi-stage E2E perception model capable of identifying RDAs and predicting trajectories of an autonomous vehicle in driving environments, in accordance with some implementations of the present disclosure.
　　**FIG. 7** illustrates an example method of deploying an E2E perception model for detection and navigation of RDAs in driving environments, in accordance with some implementations of the present disclosure.
　　**FIG. 8** depicts a block diagram of an example computer device capable of a training and/or deploying an E2E perception model, including one or more RDA detection models that use a combination of camera, radar, and/or lidar images for accurate identification and navigation of undrivable regions of driving environments, in accordance with some implementations of the present disclosure.

**SUMMARY**

In one implementation, disclosed is a system that includes a sensing system of a vehicle and a data processing system of the vehicle. The sensing system is configured to acquire a first sensing data associated with a first set of times. The first sensing data includes a first set of camera images of an environment, a first set of radar images of the environment, and a first set of lidar images of the environment. The data processing system is configured to generate, using a first neural network (NN), one or more camera features characterizing the first set of camera images. The data processing system is further configured to generate, using a second NN, one or more radar features characterizing the first set of radar images. The data processing system is further configured to generate, using a third NN, one or more lidar features characterizing the first set of lidar images. The data processing system is further configured to process the one or more camera features, the one or more radar features, and the one or more lidar features to obtain an indication of a reduced drivability area (RDA) in the environment.

In another implementation, disclosed is a method that includes obtaining, using a sensing system of a vehicle, first sensing data associated with a first set of times. The first sensing data includes a first set of camera images of an environment, a second set of radar images of the environment, and a third set of lidar images of the environment. The method further includes generating, using a first NN, one or more camera features characterizing the first set of camera images. The method further includes generating, using a second NN, one or more radar features characterizing the second set of radar images. The method further includes generating, using a third NN, one or more lidar features characterizing the third set of lidar images. The method further includes processing the one or more camera features, the one or more radar features, and the one or more lidar features to obtain an indication of an RDA in the environment.

In yet another implementation, disclosed is an autonomous vehicle that includes a sensing system, a data processing system, and a driving control system configured. The sensing system is configured to acquire sensing data of a plurality of sensing modalities. The plurality of sensing modalities is selected from at least a camera sensing modality, a radar sensing modality, or a radar sensing modality. The data processing system is configured to generate, using a first NN, one or more first features characterizing sensing data of a first sensing modality. The data processing system is further configured to generate, using a second NN, one or more second features characterizing sensing data of a second sensing modality. The data processing system is further configured to process, using a third neural network, the one or more first features and one or more second features, to obtain an indication of an RDA in an environment of the autonomous vehicle. The first NN, the second NN, and the third NN are trained together using training data of each sensing modality of the plurality of sensing modalities. The driving control system is configured to select a driving path of the autonomous vehicle in view of the indication of the RDA.

## DETAILED DESCRIPTION

An autonomous vehicle or a vehicle deploying various advanced driver-assistance features can use multiple sensor modalities to facilitate detection of objects in outside environments and predict future trajectories of such objects. Sensors can include radio detection and ranging (radar) sensors, light detection and ranging (lidar) sensors, digital cameras, ultrasonic sensors, positional sensors, and the like. Different types of sensors can provide different and complementary benefits. For example, radars and lidars emit electromagnetic signals (radio signals or optical signals) that reflect from the objects and carry back information about distances to the objects (e.g., determined from time of flight of the signals) and velocities of the objects (e.g., from the Doppler shift of the frequencies of the reflected signals). Radars and lidars can scan an entire 360-degree view by using a series of consecutive sensing frames. Sensing frames can include numerous reflections covering the outside environment in a dense grid of return points. Each return point can be associated with the distance to the corresponding reflecting object and a radial velocity (a component of the velocity along the line of sight) of the reflecting object.

Lidars, by virtue of their sub-micron or micron optical wavelengths, have high spatial resolution, which facilitates obtaining many closely-spaced return points from the same object. This enables accurate detection and tracking of objects once the objects are within the reach of lidar sensors. Radar sensors are inexpensive, require less maintenance than lidar sensors, have a larger working range of distances, and have good tolerance of adverse weather conditions. Cameras (e.g., photographic or video cameras) capture two-dimensional projections of the three-dimensional outside space onto an image plane (or some other non-planar imaging surface) and can acquire high resolution images at both shorter distances and longer distances.

Various sensors of a vehicle's sensing system (e.g., lidars, radars, cameras, and/or other sensors, such as sonars) capture complementary depictions of objects located in the environment of the vehicle. The vehicle's perception system identifies objects based on objects' appearance, state of motion, trajectory of the objects, and/or other properties. For example, lidars can accurately map a shape of one or more objects (using multiple return points) and can further determine distances to those objects and/or the objects' velocities. Cameras can obtain visual images of the objects. The perception system can map shapes and locations (obtained from lidar data) of various objects in the environment to their visual depictions (obtained from camera data) and perform a number of computer vision operations, such as segmenting (clustering) sensing data among individual objects (clusters), identifying types/makes/models/etc. of the individual objects, and/or the like. A prediction and planning system can track motion (including but not limited to locations and velocities) of various objects across multiple times and then extrapolate the previously observed motion into the future. This predicted motion can be used by various vehicle control systems to select a driving path that takes these objects into account, e.g., avoids the objects, slows the vehicle down in the presence of the objects, and/or takes some other suitable actions.

In addition to detection of animate objects, the sensing system of a vehicle serves an important purpose of identifying various semantic information, such as markings on a road pavement (e.g., boundaries of driving lanes, locations of stop lines, etc.), traffic lights, traffic signs, indications of areas that are temporarily closed off to traffic or areas where traffic is limited. For example, an emergency (e.g., fire, police, ambulance, environment hazard, etc.) crew can temporarily close or limit an otherwise drivable area, e.g., by diverting all traffic on a detour or channeling traffic to a particular lane(s), establishing a temporary reversible lane for managing vehicle flow in both directions of the traffic, and/or taking any other action. Such semantically blocked or limited areas are typically not marked on maps and an autonomous vehicle has to rely on sensor data to identify and navigate such areas. Similarly, a construction crew can initiate a maintenance project with no forewarning and limit traffic within a construction zone. Furthermore, even when a construction zone is marked on a map, in some instances there can be no viable alternative route and the autonomous vehicle has to drive close to the construction zone. Additionally, the layout of the construction zone can be in a state of flux, e.g., with lanes shifting in a different direction, previously opened lanes closing and closed lanes reopening, and so on. Such closed off areas, partially drivable areas, construction areas, and/or the like are referred to as restricted drivability areas (RDAs) herein. An RDA can be marked or otherwise semantically identified with a diverse set of features (markers) that can be very case-specific, e.g., a police car or fire truck blocking the street, emergency crew members walking on the roadway, a "No Traffic" (or similar) temporary sign placed to mark an RDA, a caution tape set across one or more lanes, a water hose connected to a hydrant or fire truck and lying on the pavement, a set of flares/lights marking a boundary of an undrivable portion of the road, emergency or construction crew members walking on the roadway, and/or the like.

Because situations that could cause an RDA are numerous, training a reliable machine learning model capable of detecting all such situations is challenging. In particular, collecting a representative set of training data can be difficult since various RDA situations are not frequently encountered during typical driving missions. The existing techniques, therefore, rely on rule-based RDA identifications that deploy situation-specific heuristics. For example, detection of a scene of an accident can rely on a determination that a police car is blocking the roadway while having emergency lights turned on, identification of a construction RDA can rely on detection of cones, plastic barriers, barricades, and/or the like. The rules-based heuristics, however, do not fully capture the broader context of the scene and can result in false positives or missed RDAs. For example, a stopped or even moving police car can be mistaken for an RDA marker. Similarly, a person in a safety uniform jaywalking across the roadway can be mistaken for a member of a fire or construction crew, triggering an unwanted response, e.g., causing the autonomous vehicle to stop and block the traffic. Anticipating and formulating various exceptions to numerous rule-based heuristics covering a practically unlimited multitude of real-world situations is a formidable task.

Aspects and implementations of the present disclosure address these and other challenges of the modern technology by providing for end-to-end (E2E) perception systems that leverage multi-sensor modalities and temporal aggregation of sensing data with predictive learning that uses unlabeled data and efficiently generalizes to new driving situations. An E2E perception model can use data of multiple sensing modalities, e.g., camera data, radar data, lidar data, audio data, and/or the like, as an input and can generate outputs that classify various elements (e.g., regions mapped to pixels) of a driving environment (e.g., a certain area around the autonomous vehicle) by their likelihood of belonging to an RDA. The elements can then be joined into connected regions representing one or more RDAs of the driving environment (e.g., a closed-off area, a construction area, and/or the like).

More specifically, various streams of data-e.g., a camera stream, radar stream, lidar stream, etc.-can first be processed by a respective modality network, e.g., camera images can be processed by a camera network, radar images can be processed by a radar network, and so on. For example, the radar network generates a set of radar features (feature vectors, embeddings) associated with specific coordinates $x, y$ of a two-dimensional bird's eye view (BEV) grid, such that a radar feature $F_R(x, y; t)$ characterizes presence (or absence) of a reflecting object located at point $x, y$ of the BEV grid at a given time $t$ or the radar data (image) capture. In some implementations, the radar data may be initially generated in polar (or spherical) coordinates, with the subsequent mapping performed to the grid (Cartesian) coordinates as part of a gather transformation that associates various points of the radar point cloud with specific locations within the BEV grid. Additionally, the radar feature $F_R(x, y; t)$ can characterize a type of a reflection, e.g., distinguish a reflection from a metallic object (traffic signs, vehicles, etc.) from a reflection from non-metallic objects (e.g., trees, concrete structures, etc.). The radar feature $F_R(x, y; t)$ can further characterize context of the reflecting point $x, y$, e.g., semantic associations of the point $x, y$ to various other radar-reflecting points $x', y'$. The coordinates of various reflecting points can be determined directly from the radar data (e.g., distance and bearing towards the point of a radar signal reflection). Similarly, the lidar network can generate lidar features $F_L(x, y; t)$ characterizing types of lidar reflections at the point $x, y$ of the BEV grid at time $t$, a context provided by various other lidar-reflecting points $x', y'$, and/or the like. The camera network can similarly determine a camera feature $F_C(x, y; t)$ characterizing visual appearance of the portion of the environment associated with point $x, y$ of the BEV grid at time $t$. Since camera images lack explicit distance (depth) information, the camera network can also (together with or after feature generation) perform a lift (gather) transform that associates various pixels of the camera images with points $x, y$ of the BEV grid that are also associated with the radar/lidar returns. The lift transform can be performed by estimating the most likely distance(s) associated with a given pixel in a camera image (e.g.,

distance to the object or to a portion of the object depicted by the pixel) or evaluating a whole distribution of various such possible distances. Correspondingly, the camera network can map the camera features to the same BEV grid to which the radar/lidar networks map the corresponding radar/lidar features.

Various sensing modalities provide complementary benefits. For example, camera images have rich contextual information and capture both short-range and long-range scenery. Lidar data provides high resolution imaging that is most effective at short-to-medium ranges. Radar data has lower resolution but can reach out to long distances and is robust against poor weather conditions.

In some implementations, the camera feature, the radar feature, and the lidar feature can then be aggregated into a joint feature, $\{F_C(x, y; t), F_R (x, y; t), F_L(x, y; t)\} \rightarrow F(x, y; t),$ that can be processed by another model, also referred to as a BEV backbone model herein. The BEV backbone model can further capture temporal context of the sensing data, e.g., a stack (tensor) of joint features corresponding to multiple times $t: \{F(x, y; t_1), F(x, y; t_2), F(x, y; t_3) ...\}$. In some implementations, the BEV backbone network can feed intermediate outputs to a number of classifier (detection) heads that output classes for various BEV elements $x, y$. For example, an RDA detection head can classify BEV elements $x, y$ as drivable (regular roadway) or undrivable points. More specifically, the output of the RDA detection head can include probabilities $P_{RDA}(x, y)$ with, e.g., $P_{RDA} \approx 0$ indicating a certainly drivable element, $P_{RDA} \approx 1$ indicating a certainly undrivable element, and $P_{RDA} \approx 0.5$ indicating an element equally likely to be drivable or undrivable (which can be an element at or near a boundary between a drivable and undrivable area). A cluster (or multiple clusters) of element with the probability above a certain threshold, $P_{RDA} \geq P_T$, indicates a region of the driving environment estimated to be inaccessible to vehicles.

A separate driving prediction head can output a probable driving path, e.g., likelihoods $P_D (x, y)$ that various points $x, y$ would be driven through by an expert driver navigating the current driving environment. For example, the E2E perception model can determine that, upon encountering a blocked (e.g., by a fire crew) road, the expert driver would make a right/left turn, a U-turn, and/or some other driving maneuver (e.g., waiting to be let through).

The E2E perception models can be trained using several techniques, such as supervised learning and imitation learning, among others. For example, a sensing data log collected for a given training driving environment (during a previous-historical-driving mission) can be annotated-e.g., by a human developer-with the boundaries of the RDA. Training of the E2E perception model can use such annotations as the ground truth for supervised training of the RDA detection head. Imitation (e.g., self-supervised) learning can be used to train the driving prediction head to output the map of driving probabilities $P_D (x, y)$ that imitates the actual driving maneuver executed by a human expert driver during the historical mission. The backbone networks and/or the classification heads can be trained using dropout techniques, e.g., for at least some training epochs the sensing data of one or more modalities can be dropped (replaced with zeros) so that the E2E perception model learns to use the remaining sensing modalities more efficiently.

The outputs of the E2E perception model can be passed on to a planner module to chart and implement a driving trajectory of the vehicle consistent with the identified RDAs and/or the estimated human-favored driving path. In driver-assistance systems operating in driver-controlled modes, the detected RDAa can be communicated to the driver, e.g., displayed on a dashboard, accompanied by sound warnings, and/or the like. Similarly, the dashboard can display the most likely driving path that the perception model estimated an expert driver would choose.

Advantages of the described implementations include, but are not limited to, accurate, reliable, and fast detection and mapping of RDAs using E2E perception models that do not rely on rules-based detection. As a result, multiple heuristics classifiers can be replaced with a single more accurate E2E perception model. This leads to improved driving trajectory selection and enhanced safety of driving operations.

As used in the instant disclosure, a feature vector (an embedding) should be understood as any suitable digital representation of an input data, e.g., as a vector (string) of any number $M$ of components, which can have integer values or floating-point values. Feature vectors can be considered as points in an $M$-dimensional embedding space. The dimensionality $M$ of the embedding space (defined as part of any pertinent model architecture) can be smaller than the size of the input data (camera/radar/lidar images). During training, a model learns to associate similar sets of training input data with similar feature vectors represented by points closely situated in the embedding space and further learns to associate dissimilar sets of training input data with points that are located farther apart in that space.

In those instances, where description of the implementations refers to autonomous vehicles, it should be understood that similar techniques can be used in various driver-assistance systems that do not rise to the level of fully autonomous driving systems. In some embodiments, disclosed techniques can be used in Level 2 driver-assistance systems that implement steering, braking, acceleration, lane centering, adaptive cruise control, etc., as well as other driver support. In some embodiments, the disclosed techniques can be used in Level 3 driving-assistance systems capable of autonomous driving under limited (e.g., highway) conditions. In such systems, fast and accurate detection and tracking of objects can be used to inform the driver of the approaching vehicles and/or other objects, with the driver making the ultimate driving decisions (e.g., in Level 2 systems), or to make certain driving decisions (e.g., in Level 3 systems), such as reducing speed, changing lanes, etc., without requesting driver's feedback.

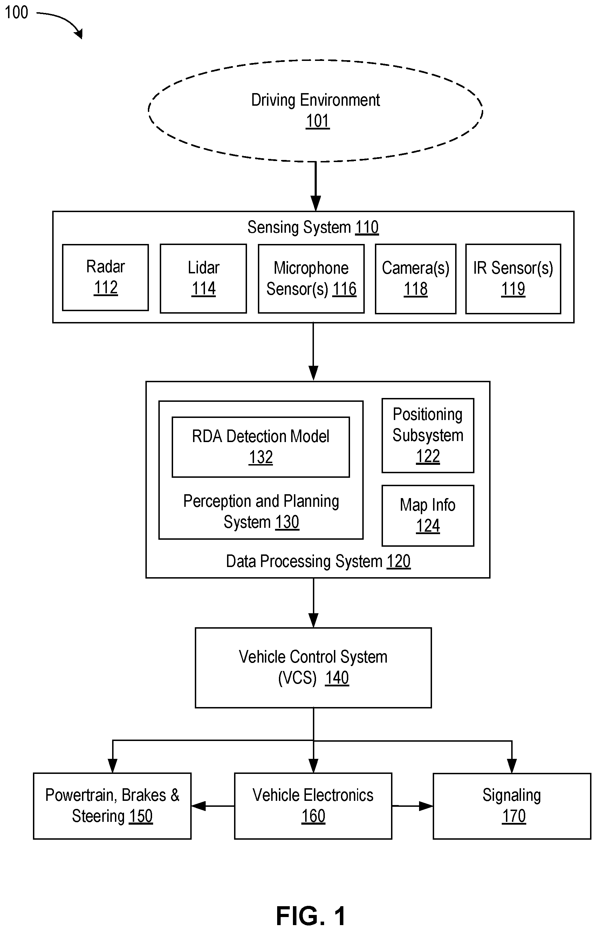

**FIG.** 1 is a diagram illustrating components of an example vehicle 100 capable of deploying an E2E perception model for RDA detection and navigation, in accordance with some implementations of the present disclosure. Autonomous vehicles can include motor vehicles (cars, trucks, buses, motorcycles, all-terrain vehicles, recreational vehicles, any specialized farming or construction vehicles, and the like), naval vehicles (ships, boats, yachts, submarines, and the like), or any other self-propelled vehicles (e.g., robots, factory or warehouse robotic vehicles, sidewalk delivery robotic vehicles, etc.) capable of being operated in a self-driving mode (without a human input or with a reduced human input).

A driving environment 101 can include any objects (animate or inanimate) located outside vehicle 100, such as roadways, buildings, trees, bushes, sidewalks, bridges, mountains, other vehicles, pedestrians, and so on. The driving environment 101 can be urban, suburban, rural, and so on. In some implementations, the driving environment 101 can be an off-road environment (e.g., farming or other agricultural land). In some implementations, the driving environment can be an indoor environment, e.g., the environment of an industrial plant, a shipping warehouse, a hazardous area of a building, and so on. In some implementations, the driving environment 101 can be substantially flat, with various objects moving parallel to a surface (e.g., parallel to the ground). In other implementations, the driving environment can be three-dimensional and can include objects that are capable of moving along all three directions (e.g., balloons, leaves, etc.). Hereinafter, the term "driving environment" should be understood to include all environments in which an autonomous motion of self-propelled vehicles can occur. For example, "driving environment" can include any possible flying environment of an aircraft or a marine environment of a naval vessel. The objects of the driving environment 101 can be located at any distance from vehicle 100, from close distances of several feet (or less) to several miles (or more).

As described herein, in a semi-autonomous or partially autonomous driving mode, even though the vehicle assists with one or more driving operations (e.g., steering, braking and/or accelerating to perform lane centering, adaptive cruise control, advanced driver assistance systems (ADAS), or emergency braking), the human driver is expected to be situationally aware of the vehicle's surroundings and supervise the assisted driving operations. Here, even though the vehicle may perform all driving tasks in certain situations, the human driver is expected to be responsible for taking control as needed.

Although, for brevity and conciseness, various systems and methods can be described below in conjunction with autonomous vehicles, similar techniques can be used in various driver assistance systems that do not rise to the level of fully autonomous driving systems. In the United States, the Society of Automotive Engineers (SAE) have defined different levels of automated driving operations to indicate how much, or how little, a vehicle controls the driving, although different organizations, in the United States or in other countries, may categorize the levels differently. More specifically, disclosed systems and methods can be used in SAE Level 2 (L2) driver-assistance systems that implement steering, braking, acceleration, lane centering, adaptive cruise control, etc., as well as other driver support. The disclosed systems and methods can be used in SAE Level 3 (L3) driving-assistance systems capable of autonomous driving under limited (e.g., highway) conditions. Likewise, the disclosed systems and methods can be used in vehicles that use SAE Level 4 (L4) self-driving systems that operate autonomously under most regular driving situations and require only occasional attention of the human operator. In all such driving-assistance systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

The example vehicle 100 can include a sensing system 110. The sensing system 110 can include various electromagnetic (e.g., optical) and non-electromagnetic (e.g., acoustic) sensing subsystems and/or devices. The sensing system 110 can include a radar (or multiple radars) 112, which can be any system that utilizes radio or microwave frequency signals to sense objects within the driving environment 101 of the vehicle 100. The radar(s) 112 can be configured to sense both the spatial locations of the objects and velocities of the objects (e.g., using the Doppler shift technology). Hereinafter, "velocity" refers to both how fast the object is moving (the speed of the object) as well as the direction of the object's motion. In some implementations, the sensing system 110 can include a lidar 114, which can be a laser-based unit capable of determining distances to the objects (including their spatial dimensions) and velocities of the objects in the driving environment 101. Each of radar 112 and lidar 114 can include a coherent sensor, such as a frequency-modulated continuous-wave (FMCW) lidar or radar sensor. For example, radar 112 can use heterodyne detection for velocity determination. In some implementations, the functionality of a ToF and coherent radar is combined into a radar unit capable of simultaneously determining both the distance to and the radial velocity of the reflecting object. Such a unit can be configured to operate in an incoherent sensing mode (ToF mode) and/or a coherent sensing mode (e.g., a mode that uses heterodyne detection) or both modes at the same time. In some implementations, multiple radars 112 or lidars 114 can be mounted on vehicle 100.

Lidar 114 can include one or more light sources producing and emitting signals and one or more detectors of the signals reflected back from the objects. In some implementations, lidar 114 can perform a 360-degree scanning in a horizontal direction. In some implementations, lidar 114 can be capable of spatial scanning along both the horizontal and vertical directions. In some implementations, the field of view can be up to 90 degrees in the vertical direction (e.g., with at least a part of the region above the horizon being scanned with lidar signals). In some implementations, the field of view can be a full sphere (consisting of two hemispheres).

The sensing system 110 can further include one or more cameras 118 to capture images of the driving environment 101. The images can be two-dimensional projections of the driving environment 101 (or parts of the driving environment 101) onto an imaging surface (flat or non-flat) of the camera(s). Some of the cameras 118 of the sensing system 110 can be video cameras configured to capture a continuous (or quasi-continuous) stream of images of the driving environment 101. The sensing system 110 can also include one or more infrared (IR) sensors 119. The sensing system 110 can further include one or more microphone sensors130 116 that can be used to capture audio data for the driving environment, e.g., sirens and other sounds of emergency vehicles.

The sensing data obtained by the sensing system 110 can be processed by a data processing system 120 of vehicle 100. For example, the data processing system 120 can include a perception and planning system 130. The perception and planning system 130 can be configured to detect and track objects in the driving environment 101 and to recognize the detected objects. For example, perception and planning system 130 can analyze images captured by the cameras 118 and can be capable of detecting traffic light signals, road signs, roadway layouts (e.g., boundaries of traffic lanes, topologies of intersections, designations of parking places, and so on), presence of obstacles, and the like. Perception and planning system 130 can further receive radar sensing data (Doppler data and ToF data) and determine distances to various objects in the environment 101 and velocities (radial and, in some implementations, transverse, as described below) of such objects. In some implementations, perception and planning system 130 can use radar data in combination with the data captured by the camera(s) 118, as described in more detail below.

Perception and planning system 130 monitors how the driving environment 101 evolves with time, e.g., by keeping track of the locations and velocities of the animate objects (e.g., relative to Earth and/or the AV) and predicting how various objects are to move in the future, over a certain time horizon, e.g., 1-10 seconds or more.

Perception and planning system 130 can include an RDA detection model 132 that identifies roadway areas in the environment 101 that are restricted to traffic. RDA detection model 132 can include one or more trainable MLMs that can process data of multiple modalities, e.g., camera data, radar data, lidar data, audio data, and/or the like.

Perception and planning system 130 can also receive information from a positioning subsystem 122, which can include a GPS transceiver and/or inertial measurement unit (IMU) (not shown in FIG. 1), configured to obtain information about the position of the AV relative to Earth and its surroundings. Positioning subsystem 122 can use the positioning data, e.g., GPS and IMU data) in conjunction with the sensing data to help accurately determine the location of vehicle 100 with respect to fixed objects of the driving environment 101 (e.g., roadways, lane boundaries, intersections, sidewalks, crosswalks, road signs, curbs, surrounding buildings, etc.) whose locations can be provided by map information 124. In some implementations, data processing system 120 can receive non-electromagnetic data, such as audio data (e.g., ultrasonic sensor data or data from one or more microphones detecting emergency vehicle sirens), temperature sensor data, humidity sensor data, pressure sensor data, meteorological data (e.g., wind speed and direction, precipitation data), and the like.

The data generated by perception and planning system 130, positional subsystem 122, and/or the other systems and components of data processing system 120 can be used by an autonomous driving system, such as vehicle control system (VCS) 140. The VCS 140 can include one or more algorithms that control how vehicle 100 is to behave in various driving situations and environments. For example, the VCS 140 can include a navigation system for determining a global driving route to a destination point. The VCS 140 can also include a driving path selection system for selecting a particular path through the immediate driving environment, which can include selecting a traffic lane, negotiating a traffic congestion, choosing a place to make a U-turn, selecting a trajectory for a parking maneuver, and so on. The VCS 140 can also include an obstacle avoidance system for safe avoidance of various obstructions (rocks, stalled vehicles, a jaywalking pedestrian, and so on) within the driving environment of the AV. The obstacle avoidance system can be configured to evaluate the size of the obstacles and the trajectories of the obstacles (if obstacles are animated) and select an optimal driving strategy (e.g., braking, steering, accelerating, etc.) for avoiding the obstacles.

Algorithms and modules of VCS 140 can generate instructions for various systems and components of the vehicle, such as the powertrain, brakes, and steering 150, vehicle electronics 160, signaling 170, and other systems and components not explicitly shown in FIG. 1. The powertrain, brakes, and steering 150 can include an engine (internal combustion engine, electric engine, and so on), transmission, differentials, axles, wheels, steering mechanism, and other systems. The vehicle electronics 160 can include an on-board computer, engine management, ignition, communication systems, carputers, telematics, in-car entertainment systems, and other systems and components. The signaling 170 can include high and low headlights, stopping lights, turning and backing lights, horns and alarms, inside lighting system, dashboard notification system, passenger notification system, radio and wireless network transmission systems, and so on. Some of the instructions output by the VCS 140 can be delivered directly to the powertrain, brakes, and steering 150 (or signaling 170) whereas other instructions output by the VCS 140 are first delivered to the vehicle electronics 160, which generates commands to the powertrain, brakes, and steering 150 and/or signaling 170.

In one example, the VCS 140 can determine that an obstacle identified by the data processing system 120 is to be avoided by decelerating the vehicle until a safe speed is reached, followed by steering the vehicle around the obstacle. The VCS 140 can output instructions to the powertrain, brakes, and steering 150 (directly or via the vehicle electronics 160) to: (1) reduce, by modifying the throttle settings, a flow of fuel to the engine to decrease the engine rpm; (2) downshift, via an automatic transmission, the drivetrain into a lower gear; (3) engage a brake unit to reduce (while acting in concert with the engine and the transmission) the vehicle's speed until a safe speed is reached; and (4) perform, using a power steering mechanism, a steering maneuver until the obstacle is safely bypassed. Subsequently, the VCS 140 can output instructions to the powertrain, brakes, and steering 150 to resume the previous speed settings of the vehicle.

The "autonomous vehicle" can include motor vehicles (cars, trucks, buses, motorcycles, all-terrain vehicles, recreational vehicle, any specialized farming or construction vehicles, and the like), naval vehicles (ships, boats, yachts, submarines, and the like), robotic vehicles (e.g., factory, warehouse, sidewalk delivery robots, etc.) or any other self-propelled vehicles capable of being operated in a self-driving mode (without a human input or with a reduced human input). "Objects" can include any entity, item, device, body, or article (animate or inanimate) located outside the autonomous vehicle, such as roadways, buildings, trees, bushes, sidewalks, bridges, mountains, other vehicles, piers, banks, landing strips, animals, birds, or other things.

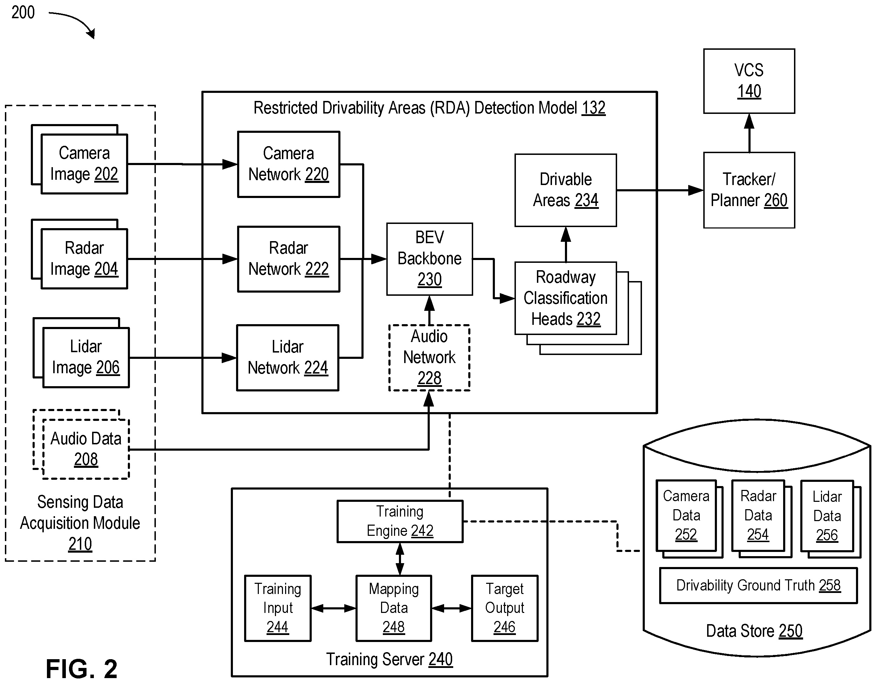

**FIG.** 2 is a diagram illustrating an example system architecture 200 that can be used for training and deployment of an E2E perception model capable of detection of RDAs in driving environments, in accordance with some implementations of the present disclosure. An input into RDA detection model 132 can include data obtained by sensing system 110 (e.g., by radar 112, lidar 114, camera(s) 118, and/or other sensors, with reference to FIG. 1). The obtained data can be provided via a sensing data acquisition module 210 that can decode, preprocess (e.g., denoise, up- or downsample, etc.), reformat data to a format accessible to RDA detection model 132. In one example implementation, sensing data acquisition module 210 can obtain a sequence of camera images 202, e.g., two-dimensional projections of the driving environment (or a portion thereof) on an array of sensing detectors (e.g., charged coupled device or CCD detectors, complementary metal-oxide-semiconductor or CMOS detectors, and/or the like). Individual camera images can have pixels of various intensities of one color (for black-and-white images) or multiple colors (for color images). Camera images 202 can be panoramic (360-degree) images or images depicting a specific portion of the driving environment. Camera images 202 can include a number of pixels. The number of pixels can depend on the resolution of the image. Each pixel can be characterized by one or more intensity values. A black-and-white pixel can be characterized by one intensity value, e.g., representing the brightness of the pixel, with value 1 corresponding to a white pixel and value 0 corresponding to a black pixel (or vice versa). The intensity value can assume continuous (or discretized) values between 0 and 1 (or between any other chosen limits, e.g., 0 and 255). Similarly, a color pixel can be represented by more than one intensity value, such as three intensity values (e.g., if the RGB color encoding scheme is used) or four intensity values (e.g., if the CMYK color encoding scheme is used). Camera images 202 can be preprocessed, e.g., downscaled (with multiple pixel intensity values combined into a single pixel value), upsampled, filtered, denoised, and the like. Camera images 202 can be in any suitable digital format (JPEG, TIFF, GIG, BMP, CGM, SVG, and so on).

Sensing data acquisition module 210 can further obtain radar images 204 (and, similarly, lidar images 206), which can include a set of return points (point cloud) corresponding to radar (lidar) beam reflections from various objects in the driving environment. Each return point can be understood as a data unit (pixel) that includes coordinates of reflecting surfaces, radial velocity data, intensity data, and/or the like. For example, sensing data acquisition module 210 can provide radar images 204 (and, similarly, lidar images 206) that include the radar (lidar) intensity map $I(R, \theta, \phi)$, where R, $\theta$, $\phi$ is a set of spherical coordinates. In some implementations, Cartesian coordinates, elliptic coordinates, parabolic coordinates, or any other suitable coordinates can be used instead. The radar (lidar) intensity map identifies an intensity of the radar (lidar) reflections for various points in the field of view of the radar (lidar). The coordinates of objects that reflect radar (lidar) signals can be determined from directional data (e.g., polar $\theta$ and azimuthal $\phi$ angles in the direction of signal transmissions) and distance data (e.g., radial distance R determined from the time of flight of the signals). Radar images 204 (and, similarly, lidar images 206) can further include velocity data of various reflecting objects identified based on detected Doppler shift of the reflected signals.

Camera images 202, radar images 204, and/or lidar images 206 can be large images of the entire driving environment or images of smaller portions of the driving environment (e.g., camera image acquired by a forward-facing camera(s) of the sensing system 110). In some implementations, sensing data acquisition module 210 can crop camera images 202, radar images 204, and/or lidar images 206 corresponding to a certain segment around a direction of motion of the vehicle. For example, since relevant drivable areas of interest are typically located around the direction of travel of the vehicle, sensing data acquisition module 210 can crop camera images 202, radar images 204, and/or lidar images 206 to within a forward-looking segment that is 200-250 m long and 20-40 m wide, in one example non-limiting implementation. The size of the segment can depend on the speed of the vehicle and a type of the driving environment and can be different for a highway driving environment than for an urban driving environment. Camera images 202 can be processed by a camera network 220, radar images 204 can be processed by a radar network 222, and lidar images 206 can be processed by a lidar network 224 Camera network 220 generates camera features, radar network 222 generates radar features, and lidar network 224 generates lidar features (the features are not shown in **FIG. 2).** The camera features, the radar features, and the lidar features can be associated with a two-dimensional bird's eye view (BEV).

Any, some, or all of the camera features, the radar features, and the lidar features can be combined and processed by a BEV backbone 230 and one or more roadway classification heads 232. Roadway classification heads 232 can classify pixels of the BEV grid-and the corresponding regions of the roadway-as normal (drivable) or restricted, as regions a human expert driver would drive through or avoided, and/or the like. Various networks of RDA detection model 132 can include convolutional neural networks, recurrent neural networks (RNN) with one or more hidden layers, fully connected neural networks, long short-term memory neural networks, transformers, Boltzmann machines, and so on. In some implementations, RDA detection model 132 can further process audio data 208 (e.g., collected by one or more microphone sensors 116 in **FIG. 1)** using an audio network 228 that generates audio features that are used as an additional input into BEV backbone 230. Audio data 208 can include a suitable digital representation of audio (sounds) collected from the driving environment, such as spectrograms, mel-spectrograms, and/or the like.

Output of RDA detection model 132 can include identified drivable areas 234 that are provided to tracker/planner 260, which can be a part of perception and planning system 130 of **FIG. 1.** Tracker/planner 260 can track motion (e.g., relative to the vehicle) of road-blocking objects (e.g., emergency vehicles, cones, flairs, tape, barriers, and/or the like), traffic signs, other vehicles, and any other objects. In some implementations, behavior of objects identified by RDA detection model 132 can be tracked using a suitable motion filter, e.g., Kalman filter. The Kalman filter computes a most probable geomotion data in view of the measurements obtained (e.g., output of RDA detection model 132), predictions made according to a physical model of object's motion, and some statistical assumptions about measurement errors (e.g., covariance matrix of errors). Tracker/planner 260 can also select a path of the vehicle consistent with the identified traffic signs and provide instructions to vehicle control system 140 for implementation of the selected driving path.

Training of RDA detection model 132 and/or other MLMs can be performed by a training engine 242 hosted by a training server 240, which can be an outside server that deploys one or more processing devices, e.g., central processing units (CPUs), graphics processing units (GPUs), parallel processing units (PPUs), and/or the like. Training engine 242 can have access to a data store 250 storing various training data for training of RDA detection model 132. In some implementations, training data can include camera images 252 acquired during actual driving missions by onboard cameras and can further include radar images 254 and/or lidar images 256 associated with camera images 252, e.g., radar/lidar images of substantially the same regions of corresponding driving environments acquired at substantially the same time as the camera images. Training data stored by data store 250 can further include drivability ground truth 258, which can include correct identification of regions of the environment with restricted drivability, e.g., polygons enclosing RDAs. In some implementations, such ground truth can be determined by a developer manually identifying restricted regions of the environment. Drivability ground truth 258 can further include driving trajectories, e.g., a region of the driving environment driven by a vehicle operated by a human expert driver. In some implementations, such ground truth can be determined from logs of historical driving missions.

RDA detection model 132, as illustrated in **FIG. 2,** can be trained using training data that includes training inputs 244 and corresponding target outputs 246 (correct matches for the respective training inputs). During training, training engine 242 can retrieve training data from data store 250, prepare one or more training inputs 244 and one or more target outputs 246 (ground truth) and use the prepared inputs and outputs to train one or more models, including but not limited to RDA detection model 132. Training data can also include mapping data 248 that maps training inputs 244 to the target outputs 246. During training of RDA detection model 132, training engine 242 can cause RDA detection model 132 to learn patterns in the training data captured by training input/target output pairs. To evaluate differences between training outputs and target outputs 246, training engine 242 can use various suitable loss functions such as a mean squared error loss function (e.g., to evaluate departure from continuous ground truth values, e.g., distances to signs), binary cross-entropy loss function (e.g., to evaluate departures from binary classifications), and/or any other suitable loss function. In some implementations, RDA detection model 132 can be trained by training engine 242 and subsequently downloaded onto the perception and planning system 130 of the vehicle.

During training of RDA detection model 132, training engine 242 can change parameters (e.g., weights and biases) of various networks of RDA detection model 132 until the model successfully learns to accurately identify RDAs and/or correctly predict vehicle's driving paths that avoid RDAs. In some implementations, more than one RDA detection model 132 can be trained for use under different conditions and for different driving environments, e.g., separate RDA detection models 132 can be trained for street driving and for highway driving. Different trained RDA detection models 132 can have different architectures (e.g., different numbers of neuron layers and/or different topologies of neural connections), different settings (e.g., types and parameters of activation functions, etc.), and can be trained using different sets of hyperparameters (e.g., number of epochs, learning rate, and/or the like).

The data store 250 can be a persistent storage capable of storing radar images, camera images, as well as data structures configured to facilitate accurate and fast identification and validation of sign detections, in accordance with various implementations of the present disclosure. Data store 250 can be hosted by one or more storage devices, such as main memory, magnetic or optical storage disks, tapes, or hard drives, network-attached storage (NAS), storage area network (SAN), and so forth. Although depicted as separate from training server 240, in some implementations, the data store 250 can be a part of training server 240. In some implementations, data store 250 can be a network-attached file server, while in other implementations, data store 250 can be some other type of persistent storage such as an object-oriented database, a relational database, and so forth, that can be hosted by a server machine or one or more different machines accessible to the training server 240 via a network (not shown in **FIG. 2).**

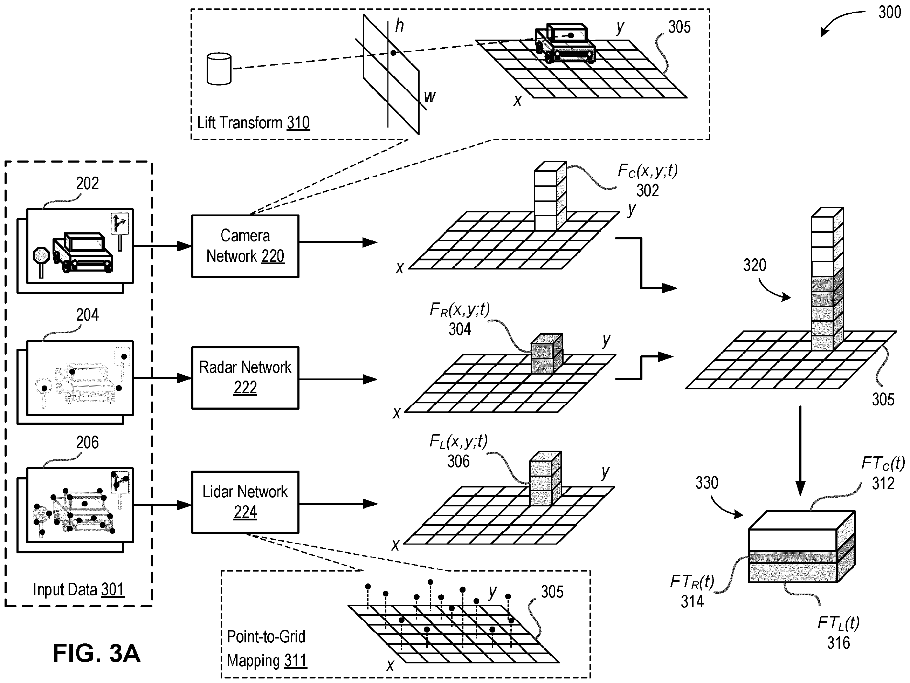

**FIGs. 3A-3B** illustrate example operations of an E2E perception model capable of efficient identification and navigation of RDAs in driving environments, in accordance with some implementations of the present disclosure. **FIG. 3A** illustrates a first portion 300 of operations of the RDA detection model (e.g., RDA detection model 132 of **FIGs. 1** and **2).** As shown in **FIG. 3A,** the first portion 300 processes individual modalities of input data 301, e.g., any, some, or all of camera images 202, radar images 204, lidar images 206, audio data (not explicitly shown in **FIG. 3A),** and/or the like.

Individual camera images 202 (and, similarly, radar images 204 and lidar images 206) can be associated with specific times $t_1$, $t_2$, $t_3$, ... when the respective images were captured. Acquisition of camera images 202, radar images 204 and lidar images 206 can be synchronized, so that the images of multiple modalities depict the driving environment at substantially the same times. Camera images 202 can be processed by camera network 220, radar images 204 can be processed by radar network 222, and lidar images 206 can be processed by lidar network 224. In some implementations, any, some or all of the networks 220-224 process images associated with multiple times $t_j$ (e.g., a sliding window *of N most* recent times). In some implementations, any, some or all of the networks 220-224 separately process images associated with different times $t_j$.

Camera network 220, radar network 222, and, similarly, lidar network 224 can have any suitable architecture. In one example, any, some or all of the networks 220-224 can or include deep convolutional neural networks, e.g., with a U-net architecture that includes an encoder stage and a decoder stage. Each stage can have multiple convolutional neural layers and one or more fully-connected layers. A convolutional encoder can include any number of filters (kernels) that broaden the perception field and identify features of the images by aggregating relevant information captured by individual units (pixels) of the images and encoding this information via features arranged in feature maps. Such feature maps can be produced using a sequence of convolutional layers and pooling (e.g., average pooling or maximum pooling) layers. A convolutional layer applies (usually multiple, e.g., tens, hundreds, or more) filters-limited-size matrices with learned weights-that scan across an image looking for certain features in the images. Different kernels can look for different features, e.g., boundaries of traffic signs, shapes of signs, color patterns of the signs, presence of texts in the signs, and/or the like. Kernels can be moved across images in steps (strides) that are smaller than the dimensions of kernels (e.g., a 5x5 pixel kernel can be shifted by 1, 2, 3 pixels during each step), forming a signal for neural activation functions. A subsampling (pooling) operation then reduces the dimension of the generated feature maps in accordance with a basic premise of the convolutional neural network architecture that information about the presence of a target feature is often more important than accurate knowledge of the feature's coordinates. As a result of such multi-layer convolutional-and-pooling processing, intermediate representations of the image grow along the feature (channel) dimension but shrink along the width-height dimension of the image. This reduction speeds up subsequent computations while simultaneously ensuring the neural network's capability to process input images of different scales.

A decoder portion of camera network 220, radar network 222, and, similarly, lidar network 224 can upsample the feature maps generated by the encoder to gradually increase resolution while reducing the feature/channel dimension (which can be performed using another set of learned deconvolutional kernels), e.g., back to the original (or reduced) dimensions of the input image with the final layer generating output features.

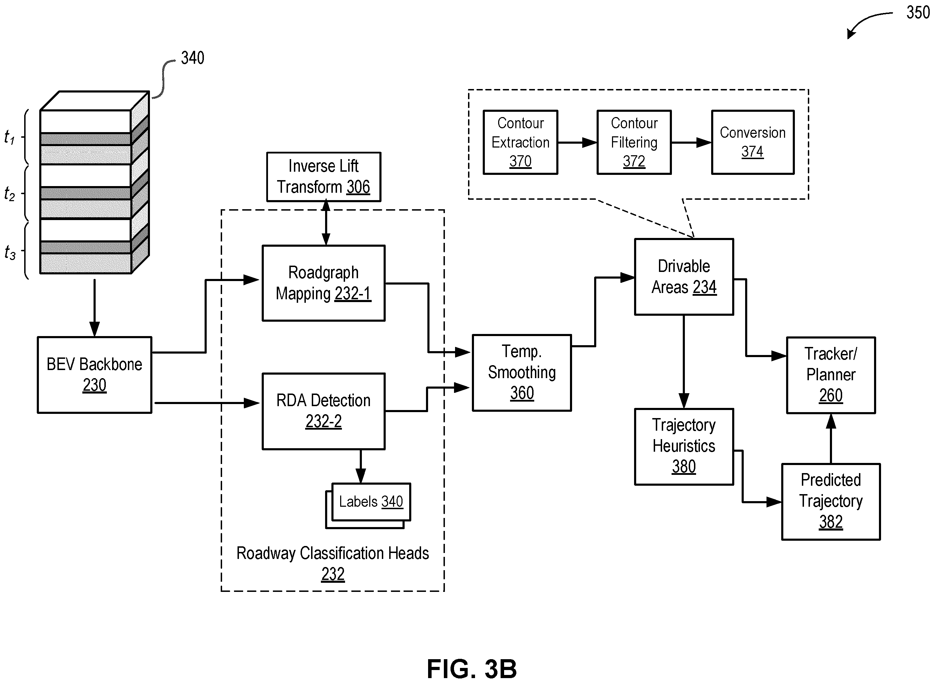

Although in the above example, convolutional encoder/deconvolutional decoder architecture is used as an illustration, any, some, or all of camera network 220, radar network 222, and lidar network 224 can have some other suitable architecture. For example, an encoder portion of the network(s) can include a recurrent neural network, a long-short term memory (LSTM) neural network, a fully-connected network, and/or some combination of such networks. In some implementations, any, some, or all of camera network 220, radar network 222, and lidar network 224 can have a transformer-based architecture with the encoder portion of the network(s) including one or more self-attention blocks and the decoder portion of the network(s) including one or more cross-attention blocks (in addition to self-attention blocks). In some implementations, camera network 220 and/or radar network 222 can include an encoder while the decoder can be implemented as part of BEV backbone 230 (with reference to **FIG. 3B).**

Camera network 220 can generate camera feature vectors $F_C(x, y; t)$ 302 characterizing visual appearance (as captured by camera image 202) of the portion of the environment associated with a point $x, y$ of a BEV grid 305 at time $t$. Similarly, radar network 222 can generate radar feature vectors $F_R(x, y; t)$ 304 characterizing presence or absence of a reflecting object (as captured by radar image 204) in the same portion of the environment associated with the same time $t$. Lidar network 224 can generate lidar feature vectors $F_L(x, y; t)$ characterizing types of lidar reflections at the point $x, y$ of the BEV grid 305 at time $t$, a context provided by various other lidar-reflecting points $x', y'$. For those locales of the BEV grid 305 where no indicia of various objects of interest are detected, the respective camera feature vectors $F_C(x, y; t)$ 302 (and, similarly, radar feature vectors $F_R(x, y; t)$ 304 and lidar feature vectors $F_L(x, y; t)$ 306) can have zero values (or values that are close to zero). Although, for the sake of illustration, a single camera feature vector $F_C(x, y; t)$ 302 (and, similarly, a single radar feature vector $F_R(x, y; t)$ 304 and a single lidar feature vector $F_L(x, y; t)$ 306) is depicted **in FIG. 3A,** feature vectors for individual points $x, y$ can be defined for the entire BEV grid 305 resulting in a camera feature tensor $FT_C(t) = \{F_C(x, y; t)\}$ 312. Feature tensor $FT_C(t)$ 312 can have dimensions $X \times Y \times C$, where $X$ and $Y$ are dimensions of the BEV grid 305 and C is a context dimension, which can be, e.g., empirically (based on testing) as part of camera network 220 architecture (defined prior to training).

Similarly, individual radar feature vectors 304 can be combined into a radar feature tensor $FT_R(t) = \{F_R(x, y; t)\}$ 314. Radar feature tensor $FT_R(t)$ 314 can have the same BEV dimensions $X$ and $Y$ and a radar context dimension $C_R$ that is different from the context dimension $C$ of camera feature tensor $FT_C(t)$ 312. For example, context dimension $C$ of the camera feature vectors/tensor can have a higher dimension than the dimension $C_R$ of radar feature vectors/tensor given more diverse types of visual contexts that camera images 202 capture compared to radar images 204.

Likewise, individual lidar feature vectors 306 can bet combined into a lidar feature tensor $FT_L(t) = \{F_L(x, y; t)\}$ 316 having a lidar context dimension $C_L$. In some implementations, lidar context dimension $C_L$ can be greater than the radar context dimension $C_R$ and smaller than camera context dimension $C$.

In one example implementation, to generate camera feature vectors 302 (and, correspondingly, camera feature tensor 312), camera network 220 can perform a lift transform 310 to compensate for the lack of explicit distance (depth) information in camera images 202. In some implementations, lift transform 310 can be performed in two stages. During a first stage, camera network 220 generates feature vectors $f(c)_{w,h}$ for pixels w, $h$ of the camera (the perspective view), where c enumerates various context components (e.g., c $\in$ [1, C]), and further supplements feature vectors $f(c)_{w,h}$ with depth information, which can be provided by separate outputs of camera network 220. For example, the depth information can include a distribution $P(d)_{w,h}$ of probabilities that a given pixel w, $h$ depicts an object located at distance d from the camera. Lift transform 310 can then compute a direct product of each feature vector $f(c)_{w,h}$ with the corresponding depth distribution $P(d)_{w,h}$ to generate a depth-augmented feature vector $f(c,d)_{w,h} = f(c)_{w,h} \otimes P(d)_{w,h}$ for pixel w, $h$.

Depth-augmented feature vector $f(c,d)_{w,h}$ computed for individual pixels can then be combined (still in the perspective view) into a joint feature tensor for the whole camera image 202: $\{f(c,d)_{w,h}\} \rightarrow ft(c, d, w, h)$. The depth-augmented feature tensor $ft(c, d, w, h)$ has dimensions $C \times D \times W \times H$, where $W \times H$ is the dimension (in pixels) of camera image 202 and $D$ is the dimension of the depth granularity. For example, distance d can be discretized among $D$ intervals, $\Delta d_1, \Delta d_2 ... \Delta d_D$. The intervals $\Delta d_i$ need not be of equal size, and can increase with the distance, e.g., $\Delta d_1 < \Delta d_D$. In some implementations, the last interval $\Delta d_D$ can extend from a certain distance (e.g., 100 m, 200 m, etc.) to infinite distances.

The second stage of lift transform 310 can include a two-dimensional (2D) mapping that maps the depth-augmented feature tensor to the feature tensor in the BEV grid 305, e.g., in Cartesian coordinates, $ft(c, d, w, h) \rightarrow FT_C(c, x, y)$, or in any other set of plane coordinates, e.g., polar coordinates r and $\theta$ within the plane of the ground. More specifically, the perspective coordinates $d, w, h$ can be transformed into 3D Cartesian coordinates $d, w, h \rightarrow x, y, z$ (or 3D cylindrical coordinates $d, w, h \rightarrow r, \theta, z)$, with z being the vertical coordinate (in the direction perpendicular to the ground). The transformation $d, w, h \rightarrow x, y, z$ can be a projective transformation, parameterized with a focal length of the camera, direction of the optical axis of the camera, and/or other similar parameters. In the instances where camera images 202 are acquired by multiple cameras (or a camera with a rotating optical axis), the transformation $d, w, h \rightarrow x, y, z$

can include multiple projective transformations, e.g., with a separate transformation used for pixels $w$, $h$ of different cameras (or by the same camera pointing in different directions).

The 2D mapping can be used to project the feature tensor expressed in the new coordinates, $ft(c, d, w, h) \rightarrow f\,t(c, x, y, z)$, and sum (or average, weight-average, or otherwise aggregate) over different heights $z$ to obtain the feature tensor $FT_C(c, x, y)$ 312, e.g., $FT_C(c, x, y) = \Sigma_i\, ft(c, x, y, z_i)$. In some implementations, the summation over coordinates $z_i$ can be performed with different weights $w_i$ assigned to different coordinates $z_i$: $FT_C(c, x, y) = \Sigma_i\, wi \cdot f\,t(c, x, y, z_i)$, e.g., with larger weights $w_i$ assigned to pixels that image objects within certain elevations from the ground (e.g., up to several meters) and lower weights assigned to other elevations (e.g., to eliminate spurious objects, such as tree branches, electric cables, etc., that do not obstruct motion of vehicles). Lift transform 310 and the use of BEV grid 305 eliminates distortions associated with perspective view of the camera sensors.

Radar feature vectors 302 outputted by the radar network 222 can be mapped to the same BEV grid 305. In the instance of radar network outputs, the distance to various reflecting pixels in radar image 204 can be accurately known (as part of radar data) so that the distribution $P(d)$ can be the unity for a specific interval of distances $\Delta d_j$ and zero for other intervals.

In some implementations, lidar feature vectors 306 can be mapped to the BEV grid 305 in a way that is similar to the mapping of the radar feature vectors 304. In some implementations, a point-to-grid mapping 311 may be applied to lidar feature vectors. More specifically, a cloud of lidar return point can be a dense cloud (e.g., with many more points than are in the radar cloud). Each location $x$, $y$ of the BEV grip can be associated with one or multiple lidar return points (e.g., those points that are closer to this location $x$, $y$ than to other elements $x'$, $y'$ of the grid). Lidar features vectors $F_L(x, y; t)$ can be aggregated (e.g., averaged) from individual features associated with individual return points associated with the location $x$, $y$.

The camera features, the radar features, and/or the lidar features can then be aggregated (e.g., concatenated) to obtain joint features. For example, feature vector aggregation can be performed for individual BEV grid locations $x$, $y$, to obtain joint feature vectors 320: $[F_C(x, y, t), F_R(x, y, t), F_L(x, y, t)] \rightarrow F(x, y, t)$. The set of joint feature vectors for various BEV grid locations represent a joint feature tensor $FT(t) = \{F(x, y; t)\}$. Equivalently, the joint feature tensor $FT(t)$ 330 represents a combination $FT(t) = [FT_C(t), FT_R(t), FT_L(t)]$ of the camera feature tensor 312, the radar feature tensor 314, and the lidar feature tensor 316.

FIG. 3B illustrates a second stage 350 of operations of the RDA detection model. In some implementations, as depicted in **FIG. 3B,** joint feature tensors associated with multiple timestamps can be aggregated into a feature stack 340, e.g., $\{FT(t_1), FT(t_2), ... FT(t_M)\}$. (For brevity, the example case of $M = 3$ is illustrated in **FIG. 3B,** but the number of timestamps need not be limited.) Times $t_1, t_2, ... t_M$ can be selected by applying a sliding window to images of input data 301. For example, during the next round of input data 301 processing by RDA detection model 132, feature stack 340 $\{FT(t_{1+S}), FT(t_{2+S}), ... FT(t_{M+S})\}$ associated with images acquired at times $t_{1+S}, t_{2+S}, ... t_{M+S}$ can be generated, with suitably chosen stride $S$, e.g., $S = 1, 2, ...$ etc. In some implementations, stride $S$ can be set based on time of E2E processing of input data 301, e.g., to avoid idling of RDA detection model 132 while also preventing clogging of RDA detection model 132 due to new input data being provided before previous input data has been converted into feature stack 340 and processed. For example, if typical time of E2E processing by RDA detection model 132 is $\tau$, the stride can be set such that $t_{j+S} - t_j \approx \tau$.

Generated feature stack(s) 340 can be processed by BEV backbone 230. In some implementations, BEV backbone 230 can include an encoder that further encodes feature stack 340 (following individual encoders of camera network 220, radar network 222, and/or lidar network 224). In some implementations, BEV backbone 230 can include both an encoder and a decoder. In some implementations, BEV backbone 230 can be a decoder whereas the encoders can be implemented as part of camera network 220, radar network 222, and/or lidar network 224.

BEV backbone 230 can feed intermediate outputs to a number of roadway classification heads 232-n that classify various locations $x$, $y$ among one or more classes. Each classification head 226-n can output a different kind of information about locations $x$, $y$. For example, a roadway identification head 232-1 can output probabilities (e.g., floating-point values) $P_R(x, y)$ that a given location $x$, $y$ is associated with a drivable roadway (e.g., a lane, an intersection, and/or the like). Correspondingly, the probability $1 - P_R(x, y)$ indicates that the location is associated with an undrivable portion of the environment, e.g., sidewalks, trees, structures, buildings, and/or the like. In some implementations, the probabilities $P_R(x, y)$ and $1 - P_R(x, y)$ can be outputted by a final binary (e.g., sigmoid) classifier layer of roadgraph mapping head 232-1.

Similarly, an RDA detection head 232-2 can output a probability $P_{RDA}(x, y)$ that location $x$, $y$ belongs to an RDA and a matching probability and $1 - P_{RDA}(x, y)$ that the location belongs to a drivable (regular unobstructed) portion of the roadway. Provided that the probability $P_{RDA}(x, y)$ exceeds an empirically set threshold, e.g., $P_T = 0.4, 0.5, 0.6, 0.75$, etc., the location $x$, $y$ can be classified as a restricted driving location where vehicles are not to enter. In some implementations, RDA detection head 232-2 can use an inverse lift transform 306 to map BEV points $x$, $y$ back to the perspective coordinates of the camera pixels $w$, $h$ to mark RDAs within the camera images. In some implementations, RDA detection head 232-2 can further output labels 340 that identify a type of an RDA. For example, a first label can identify whether drivability through the location is restricted because of an emergency (fire, police, accident, environment hazard, etc.). A second label can identity whether the location is associated with a construction zone, a third label can identity whether the location is occupied by a vehicle or some other mobile object, a fourth label can identify whether the location is occupied by a vulnerable road user (VRU), e.g., a pedestrian, a bicyclist, an animal, and/or the like.

The outputs of the roadway classification heads 232-n, e.g., $P_R (x, y; t_i)$, $P_{RDA} (x, y; t_i)$, *Labels(x, y; t_i)*, etc., can be obtained for specific timestamps $t_i$. Each set of identifications can be subject to noise, e.g., measurement noise, occlusions, variations in lighting, etc. To eliminate or reduce such noise, the outputs can undergo temporal smoothing 360 over a certain period of time, e.g., T timestamps (which can be most recent timestamps). For example, for the output of RDA detection head 232-2 (and similarly for other outputs), a simple averaging can be performed,

$$\tilde{P}_{RDA}(x, y) = \frac{1}{T}\sum_{i}^{T} P_{RDA}(x, y; t_i),$$

or some other type of smoothing/aggregation, such as weighted averaging

$$\tilde{P}_{RDA}(x, y) = \frac{1}{T}\sum_{i}^{T} w_i \cdot P_{RDA}(x, y; t_i),$$

with different weights $w_i$ used for different timestamps (e.g., higher weights given to more recent timestamps). The smoothed outputs can then be used to identify drivable areas 234 and predicted trajectories 382.

In some implementations, identification of drivable areas 234 can include one or more post-processing operations, e.g., as indicated with the dashed callout box. More specifically, a contour representing boundaries of drivable and undrivable regions can be extracted. For example, contour extraction 370 can identify a set of locations *x, y* for which $\tilde{P}_{RDA} (x, y) = P_T$, e.g., $P_T \approx 0.5$, so that the contour represents points that are equally likely to be drivable or undrivable (although, in some implementations, a threshold value $P_T$ smaller or larger than 0.5 can be used). Next, contour filtering 372 can be performed to eliminate duplicate contours, e.g., using non-maximal suppression (NMS), clustering, and/or other techniques. For example, NMS can be used to select the most probable contour in the instance of multiple (overlapping or non-overlapping) contours enclosing closely located spatial regions. NMS can include iteratively comparing probabilities of various contours and discarding one or more lower-probability contours at each iteration until the highest-probability contour (or several contours, if RDA includes multiple disconnected areas) is identified. Contours can be polygons, in some implementations, or figures of some other form (e.g., a set of overlapping boxes). The filtered contours can be processed by a conversion 376 heuristic that identifies drivable areas 234. For example, conversion 374 can evaluate various possible trajectories, e.g., modeled with graph edges connecting various grid locations (graph nodes). Conversion 374 can then identify one or more paths connecting the current position and orientation (pose) of the autonomous vehicle with various lanes (or other regions of the roadway) that lead the autonomous away (or around) the RDA in such away that the path of the autonomous vehicle does not intersect the RDA.

The roadway classification heads 232-n illustrated in FIG. 3B are intended to serve as an example, as various other classification heads can be defined and trained, depending on specific driving environments for the vehicle.

The identified drivable areas 234 can be provided to tracker/planner 260 that can track the motion of the identified areas with time relative to the vehicle, e.g., using a suitable motion tracker, such as Kalman filter. Tracker/planner 260 can further make driving decisions in view of drivable areas 234. For example, in autonomous driving systems (or driver-assistance systems operating in an autonomous or a semi-autonomous mode), tracker/planner 260 can identify and implement a driving path of the vehicle consistent with the location of drivable areas 234. In driver-assistance systems, tracker/planner 260 can provide a representation of RDA(s) and/or drivable areas 234 to a driver, e.g., via a dashboard display.

In some implementations, trajectory heuristics 380 can generate a predicted trajectory 382, e.g., a probable driving path selected by an expert driver in the current driving environment given determined drivable areas 234. More specifically, trajectory heuristics 380 can look for driving lanes that remain unblocked upon approaching an RDA and upon departing from the RDA. For example, a rightmost lane can remain drivable across an intersection that is otherwise blocked to traffic by police because of an accident. If such lanes are absent, trajectory heuristics 380 can look for drivable lanes before an RDA and drivable lanes after the RDA, e.g., a rightmost lane can be available before an intersection while the leftmost lane is available after the intersection. Trajectory heuristics 380 can then chart a predicted trajectory 382 that initially follows the leftmost lane and then crosses over to the rightmost lane. If all driving lanes in the direction of an intended travel path are undrivable, trajectory heuristics 380 can select drivable areas 234 that minimally depart from the intended travel path, e.g., trajectory heuristics 380 can select the right turn, if the forward path is blocked, select the left turn if both the forward path and the right turn are blocked, select a U-turn, if all three possibilities are unavailable. Various other heuristics can be encoded as part of trajectory heuristics 380.

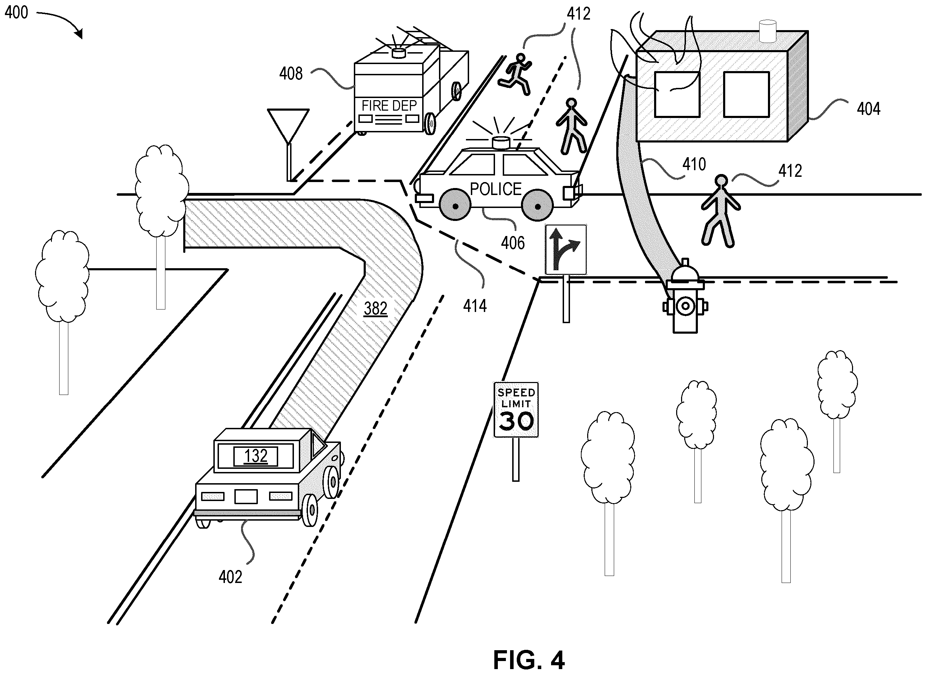

FIG. 4 is a schematic illustration of an example driving environment 400 of a vehicle 402 that deploys RDA detection model 132 for identification of undrivable areas, in accordance with some implementations of the present disclosure. As illustrated in FIG. 4, vehicle 402 is traveling in the left lane of a two-lane road and processes data of multiple sensing modalities (camera, radar, lidar, etc.) that capture images of driving environment 400. Driving environment 400 includes a scene of emergency, e.g., caused by a fire in a building 404. A police car 406 is blocking the forward motion of vehicle 402 The oncoming traffic lane is similarly blocked by a fire truck 408. A water hose 410 is preventing traffic from making a right turn. RDA detection model 132 can process data collected by sensing systems of vehicle 402, e.g., as disclosed in conjunction with FIG. 3A and FIG. 3B, and output drivable areas and RDAs. More specifically, RDA detection model 132 detects presence of some or all of police car 406, fire truck 408, water hose 410, emergence crew members 412, and/or other indicators of RDA in driving environment 400. RDA detection model 132 can identify a contour 414 (depicted with the dot-dashed line) as the boundary of the RDA. Trajectory heuristics 380 (with reference to **FIG. 3B)** can further identify the shaded region as predicted trajectory 382, e.g., a trajectory that would be selected by a human expert driver navigating driving environment 400. In some implementations, trajectory heuristics 380 can be replaced with a trained trajectory prediction model.

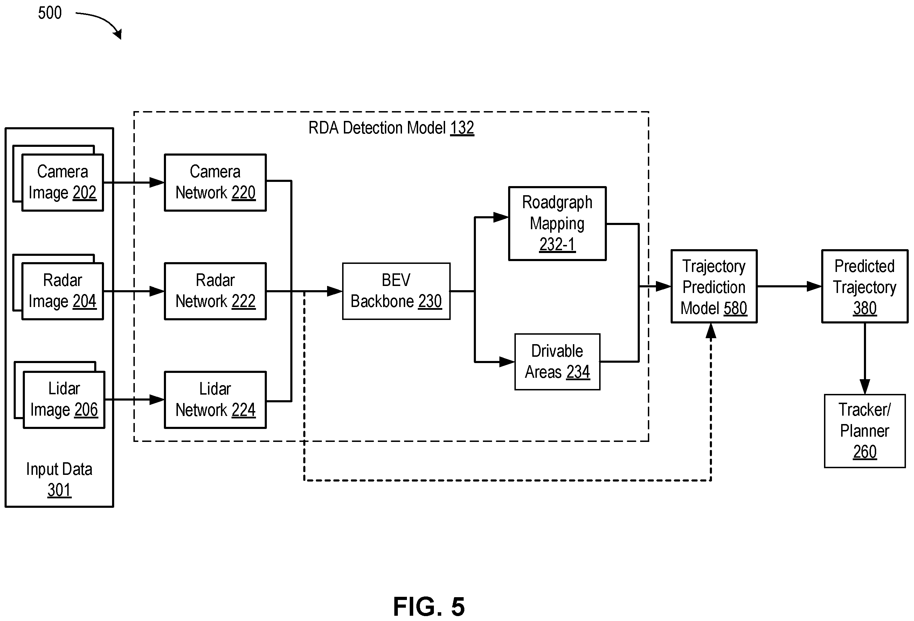

**FIG. 5** illustrates example architecture of another E2E perception model 500 capable of identifying RDAs and predicting trajectories of an autonomous vehicle in driving environments, in accordance with some implementations of the present disclosure. E2E perception model 500 deploys a trained trajectory prediction model 580 in lieu of trajectory heuristics 380 of **FIGs. 3A-3B.** Some of the parts of E2E perception model 500, e.g., temporal smoothing 360, are not explicitly shown in **FIG. 5.** Trajectory prediction model 580 can use outputs of various roadgraph classification heads, e.g., probability $P_R (x, y)$ that specific locations $x, y$ belong to various roadways of the driving environment, probability $P_{RDA} (x, y)$ that the locations are associated with RDAs of the driving environment. In some implementations, as indicated by the dashed arrow (skipped connection) an additional input into trajectory prediction model 580 can include one or more feature tensors outputted by any, some, or all of camera network 220, radar network 222, lidar network 224, and/or other networks not shown in **FIG. 5** (e.g., audio network).

Trajectory prediction model 580 can output probabilities $P_D (x, y)$ that various locations $x, y$ would be driven through by an expert driver negotiating the current driving environment. Predicted trajectory 382 can then be selected based on the locations $x, y$ that have the maximum probability $P_D (x, y)$. for the the likelihoods $P_D (x, y)$ that various locations $x, y$ would be driven. For example, for the driving environment of FIG. 4, trajectory prediction model 580 can determine that the expert driver would make the left turn and follow trajectory 382.

In some implementations, trajectory prediction model 580 can be trained separately from networks 220-224 and/or BEV backbone 230. For example, after RDA detection model 132 has been trained to output reliable roadgraph mappings and RDA/drivable areas predictions, trajectory prediction model 580 can be trained using additional ground truth that includes trajectories selected by human expert drivers during historical driving missions. In some implementations, trajectory prediction model 580 can be trained together (end-to-end) with RDA detection model 132. For example, ground truth for such training can include both roadgraph/RDA/drivable areas annotations of historical missions (e.g., sensing logs, maps, etc.) and human driver-selected trajectories. In some implementations, ground truth for such training can include human driver-selected trajectories in historical missions but not roadgraph/RDA/drivable areas annotations.

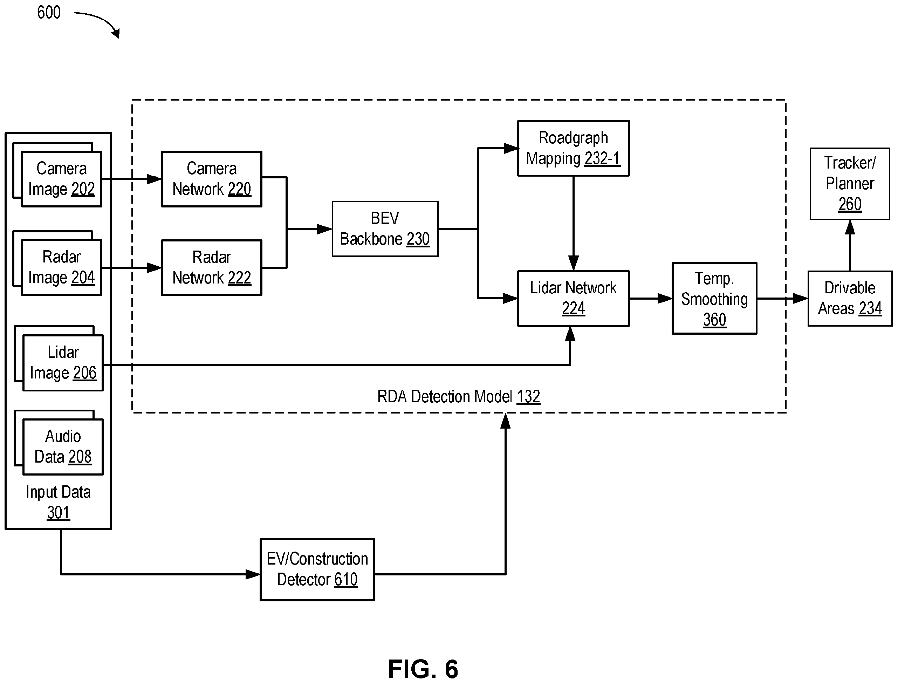

**FIG. 6** illustrates an example architecture of a multi-stage E2E perception model 600 capable of identifying RDAs and predicting trajectories of an autonomous vehicle in driving environments, in accordance with some implementations of the present disclosure. In the first stage of E2E perception model 600, camera network 220 and radar network 222 process data of the respective modalities and generate feature vectors, e.g., as disclosed in conjunction with **FIG. 3A.** The camera feature vectors and the radar feature vectors can be processed by BEV backbone 230. The output of BEV backbone 230 can be processed by one or more roadway classification heads, e.g., roadgraph mapping 232-1. An output of roadgraph mapping 232-1 can be used, together with the output of BEV backbone 230, as an input into lidar network 224, which implements the second stage of E2E perception model 600. The output of lidar network 224 can then undergo temporal smoothing 360 and identification of drivable areas, e.g., as disclosed in conjunction with **FIG. 3B.**

In some implementations, an additional neural network, e.g., emergency vehicle (EV) and construction detector 610, can be deployed for identification of driving situations in which areas of restricted drivability are likely to occur. EV/construction detector 610 can be a separately trained model that processes one or more modalities of input data 301, including but not limited to any, some, or all of camera images 202, radar images 204, lidar images 206, audio data 208, and/or the like, and generates an identification of a target scenario or multiple target scenarios. Target scenarios can include, in the way of an example and not limitation, presence of an emergency vehicle, caution tape, water hose, flares, lights, barricades, emergency crew, construction crew, and/or the like. In the instances where no indicia of the target scenarios are detected, EV/construction detector 610 can generate a null output. The null output can indicate that no processing by RDA detection model 132 is to occur. In the instances where one or more of the target scenarios are detected, EV/construction detector 610 can generate an indication of the corresponding scenarios that can be used to trigger operation of RDA detection model 132. As a result, computational and memory resources of the perception system of the vehicle(s) are not used unless there is an actual need for such processing.

Although not shown explicitly, EV/construction detector 610 can similarly be used with E2E perception models illustrated in **FIGs. 3A-3B** and **FIG. 5.**

Various networks-e.g., camera network 220, radar network 222, lidar network 224, BEV backbone 230, roadway classification heads 232-of the E2E perception models (including RDA detection models), whose architecture and operations are disclosed above in conjunction with **FIGs. 3A-3B** and **FIGs. 5-6,** can be trained together using a suitable ground truth data. Training the E2E perception models can be performed using techniques of supervised learning and imitation learning. For example, supervised learning can be used to train roadgraph mapping 232-1 head and RDA detection 232-2 head. More specifically, sensing data collected during (autonomous or driver-operated) driving missions can undergo annotations by a human developer. The developer can identify those missions that have at least one RDA, e.g., emergency scene, construction zone, and/or the like, and can further identify portions of the sensing data with timestamps associated with the historical vehicle traveling near the RDA. The developer can then mark regions-e.g., using a graphical user interface (GUI) and a suitable selection tool (mouse, touchpad, and/or the like)-within camera images (and/or lidar/camera images) of the driving environment. During training, the E2E perception model(s) can generate training outputs, e.g., predicted RDA probability maps $P_{RDA}(x, y; t)$ (and, similarly, roadgraph maps $P_R (x, y; t)$). A suitable loss function, e.g., the binary cross-entropy loss function, can be used to quantify a difference between the predicted RDA probability map $P_{RDA}(x, y; t)$ and the (binary) ground truth of developer-annotated RDAs. The loss function-quantified difference can then be used-together with various techniques of backpropagation, gradient descent, and/or the like-to modify parameters (e.g., weights and biases) of various networks of the E2E perception model(s), e.g., camera network 220, radar network 222, lidar network 224, BEV backbone 230, roadway classification heads 232, and/or the like. During such E2E training, parameters of any of these networks can be changed while training of other networks is still ongoing (though it is not necessary that parameters of all the networks be changed during each training epoch).

In some implementations, imitation (self-supervised) learning can be used to train trajectory prediction model 580 (with reference to **FIG. 5).** More specifically, trajectory prediction model 580 can output the map of driving probabilities $P_D (x, y)$ that imitates the actual driving maneuvers executed by a human expert driver during historical missions and, e.g., determined from logs of the historical missions. The binary cross-entropy loss function (or other suitable loss functions) applied to various locations $x, y$ can be used to train trajectory prediction model 580. In some implementations, trajectory prediction model 580 can be trained after other networks of RDA detection model 132 have been trained. For example, during a first training stage, any, some or all of camera network 220, radar network 222, lidar network 224, BEV backbone 230, roadway classification heads 232 can first be pre-trained to identify correct roadgraph mapping and/or RDA detection (e.g., using human-annotated ground truth). During a second training stage, trajectory prediction model 580 can be trained to imitate driving behavior of a human driver, e.g., as known from the same historical driving missions. In other implementations, training of trajectory prediction model 580 can be performed concurrently with training of any, some, or all of camera network 220, BEV backbone 230, and sign classification heads 226.

Training of any, some or all of camera network 220, radar network 222, lidar network 224, BEV backbone 230, roadway classification heads 232, trajectory prediction model 580, and/or other networks of E2E perception model(s) can include dropout techniques. More specifically, during some of the training epochs the sensing data of one or more modalities can be dropped (replaced with zeros) to train the E2E perception model(s) efficient RDA and driving path detection that does not overly rely on any single sensing modality. For example, during a first training epoch, the E2E perception model(s) can be trained to process camera images 204, radar images 204, and lidar images 206 (and, possibly, audio data 208). During a second training epoch, the E2E perception model(s) can be trained to process camera images 204 and radar images 204 (with lidar images 206 replaced with zero inputs). During a third training epoch, the E2E perception model(s) can be trained to process camera images 202 and lidar images 206 (with radar images 204 replaced with zero inputs). During a fourth training epoch, the E2E perception model(s) can be trained to process radar images 204 and lidar images 206 (with camera images 202 replaced with zero inputs), and so on.

Following the dropout training, the trained E2E perception model(s) can be deployed on vehicles that have three (or more) sensing modalities-camera, radar, lidar (audio, etc.). The dropout training makes E2E perception model(s) operable even in situations where one or more sensing modalities become temporarily disabled, e.g., when the lidar transceiver is impaired with dirt, mist, or some other environmental factors. In some implementations, the dropout-trained E2E perception model(s) can be deployed on vehicles that do not have one or more sensing modalities, e.g., vehicles that have camera and radar sensors but not lidar sensor(s), in one example.

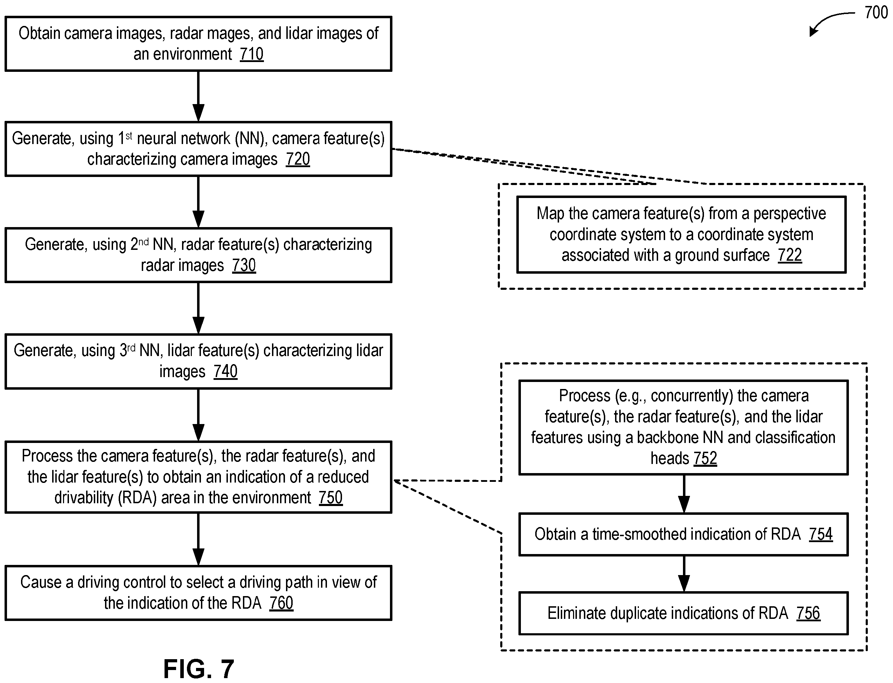

**FIG. 7** illustrates an example method 700 of deploying an E2E perception model for detection and navigation of RDAs in driving environments, in accordance with some implementations of the present disclosure. A processing device, having one or more processing units (CPUs), one or more graphics processing units (GPUs), one or more parallel processing units (PPUs) and memory devices communicatively coupled to the CPU(s), GPU(s), and/or PPU(s) can perform method 700 and/or each of its individual functions, routines, subroutines, or operations. Method 700 can be directed to systems and components of a vehicle. In some implementations, the vehicle can be an autonomous vehicle. In some implementations, the vehicle can be a driver-operated vehicle equipped with driver-assistance systems, e.g., Level 2 or Level 3 driver assistance systems, that provide limited assistance with specific vehicle systems (e.g., steering, braking, acceleration, etc. systems) or under limited driving conditions (e.g., highway driving). The processing device executing method 700 can perform instructions issued by the perception and planning system 130 of **FIG. 1** and, more specifically, of RDA detection model 132, during driving operations of the vehicle. In certain implementations, a single processing thread can perform method 700. Alternatively, two or more processing threads can perform method 700, each thread executing one or more individual functions, routines, subroutines, or operations of the method. In an illustrative example, the processing threads implementing method 700 can be synchronized (e.g., using semaphores, critical sections, and/or other thread synchronization mechanisms). Alternatively, the processing threads implementing method 700 can be executed asynchronously with respect to each other. Some operations of method 700 can be performed in a different order compared with the order shown in FIG. 7. Some operations of method 700 can be performed concurrently with other operations. Some operations can be optional.

At block 710, method 700 can include obtaining, using a sensing system of the vehicle, a first set of images of an environment, a second set of images of the environment, and a third set of images of the environment. The first set of images can include one or more perspective camera images of an environment (e.g., camera images 202 in FIG. 3A). The second set of images can include one or more radar images of the environment (e.g., radar images 204 in **FIG. 3A)** and the third set of images can include one or more lidar images of the environment (e.g., lidar images 206 in **FIG. 3A).**

At block 720, method 700 can include generating, using a first neural network (e.g., camera network 220), one or more camera features (e.g., camera feature tensor 312) characterizing the first set of camera images. As illustrated with the top callout block 722, generating the one or more camera features can include mapping the one or more camera features from a perspective coordinate system to a coordinate system associated with a ground surface (e.g., BEV grid 305 in **FIG. 3A).**

At block 730, method 700 can include generating, using a second neural network (e.g., radar network 222), one or more radar features (e.g., radar feature tensor 314 in **FIG. 3A)** characterizing the second set of radar images.

At block 740, method 700 can include generating, using a third neural network (e.g., lidar network 224), one or more lidar features (e.g., lidar feature tensor 316 in **FIG. 3A)** characterizing the third set of lidar images.

At block 750, method 700 can include processing the one or more camera features, the one or more radar features, and the one or more lidar features to obtain an indication of a reduced drivability area (RDA) in the environment. In some implementations, the indication of the RDA can include a plurality of elements, each element of the plurality of elements mapped to a corresponding region of a plurality of regions of the environment and associated with a likelihood that a respective region of the plurality of regions belongs to the RDA.

As illustrated with the bottom callout portion of **FIG. 7,** processing the one or more camera features, the one or more radar features, and the one or more lidar features can include, at block 752, using a backbone neural network and one or more classification heads. In some implementations, the backbone neural network can include a BEV neural network (e.g., BEV backbone 230 in **FIG. 3A** and **FIG. 3B)** and one or more classification neural networks (e.g., roadway classification heads 232 in **FIG. 3B).** In some implementations, the first neural network, the second neural network, the third neural network, the backbone neural network, and the one or more classification heads are trained together, e.g., end-to-end. In some implementations, the one or more classification heads can include a driving trajectory classification head that outputs a target trajectory for the vehicle, wherein the target trajectory avoids the RDA.

In some implementations, the driving trajectory classification head, the backbone neural network and one or more of the first neural network, the second neural network, or the second neural network are trained using ground truth that includes one or more trajectories of a human-operated vehicle navigating respective one or more historical driving missions, each encountering at least one RDA.

In some implementations, the first neural network, the second neural network, the third neural network, the backbone neural network, and the one or more classification heads can be trained using one or more dropout training epochs, each dropout training epoch having an output of at least one of the first neural network, the second neural network, or the third neural network replaced with a null output.

In some implementations, the one or more camera features being processed can include a time series of camera features (e.g., $FT_C(t_1)$, $FT_C(t_2)$, $FT_C(t_3)$, etc.). The one or more radar features can similarly include a time series of camera features (e.g., $FT_R(t_1)$, $FT_R(t_2)$, $FT_R$

$(t_3)$, etc.). The one or more lidar features can similarly include a time series of lidar features (e.g., $FT_L(t_1)$, $FT_L(t_2)$, $FT_L(t_3)$, etc.). In some implementations, processing the time series of camera features, the time series of radar features, and the time series of lidar features can be performed concurrently.

In some implementations, at block 754, obtaining the indication of the RDA can include using multiple sets of sensing data to time-smooth multiple candidate indications of the RDA. More specifically, the sensing system can acquire a second sensing data associated with a second set of times. The second set of times can include times $t_4$, $t_5$, $t_6$, etc., that are all different from the times of the first set of times, $t_1$, $t_2$, $t_3$. In some implementations, the second set of times can include times $t_3$, $t_4$, $t_5$, etc., that partially overlap with the first set of times, $t_1$, $t_2$, $t_3$. The second sensing data can include a fourth set of camera images of the environment, a fifth set of radar images of the environment, and a sixth set of lidar images of the environment. Method 700 can include generating (using the first neural network) one or more additional camera features characterizing the fourth set of camera images, generating (using the second neural network, one or more additional radar features characterizing the fifth set of radar images, and generating (using the third neural network) one or more additional lidar features characterizing the sixth set of lidar images. Operations of block 754 can include processing the one or more additional camera features, the one or more additional radar features, and the one or more additional lidar features to obtain an additional indication of the RDA. The indication of the RDA and the additional indication of the RDA can then be processed (e.g., averaged, aggregated, and/or the like) to obtain a time-smoothed indication of the RDA. For example, two (or more) maps of probabilities $P_{RDA}(x, y; t)$, $P_{RDA}(x, y; t')$, etc., can be averaged to obtain an aggregated probability, e.g., after mapping the two or more probabilities to the same points $x$, $y$ (e.g., of the BEV grid) relative to the ground (which can include performing a coordinate transformation from a reference frame of the moving vehicle to the coordinates associated with the stationary ground). In some implementations, to obtain the indication of the RDA, method 700 can include, at block 756, obtaining a set of prospective indications of the RDA and eliminating one or more duplicate indications of the RDA from the set of prospective indications of the RDA.

In some implementations, method 700 may also include associating the time-smoothed indication of the RDA with a roadmap to (e.g., a static high-definition map of drivable roads, streets, intersections, lanes, and/or the like) identify one or more driving lanes, mapped in the roadmap, that are blocked to traffic.

In some implementations, method 700 can continue, at block 760, with causing a driving control system of the autonomous vehicle to select a driving path of the autonomous vehicle in view of the indication of the RDA (and/or driving lanes in the roadmap), e.g., a driving path that avoids the RDA.

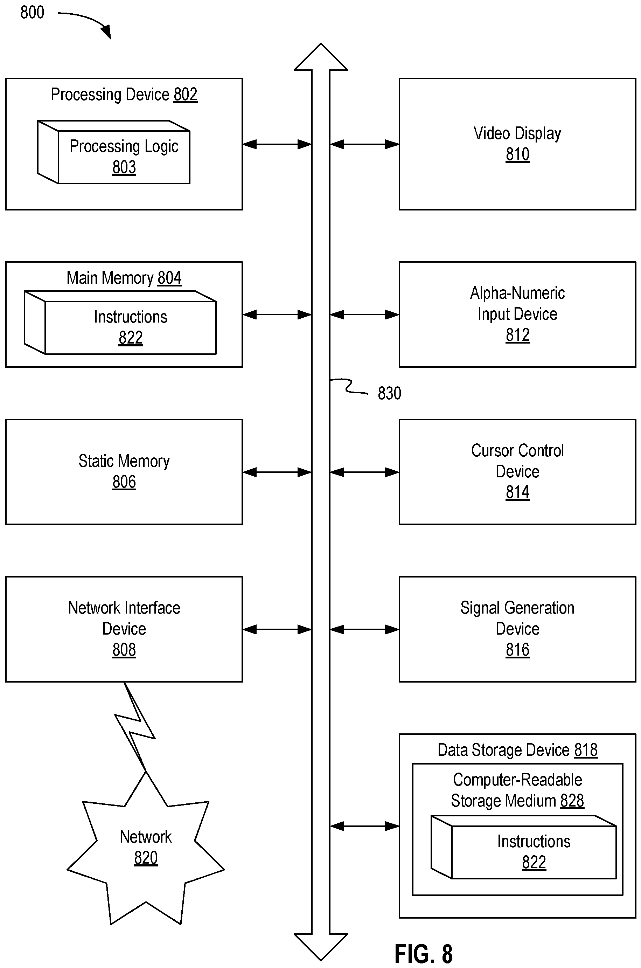

**FIG. 8** depicts a block diagram of an example computer device 800 capable of a training and/or deploying an E2E perception model, including one or more RDA detection models that use a combination of camera, radar, and/or lidar images for accurate identification and navigation of undrivable regions of driving environments, in accordance with some implementations of the present disclosure. Example computer device 800 can be connected to other computer devices in a LAN, an intranet, an extranet, and/or the Internet. Computer device 800 can operate in the capacity of a server in a client-server network environment. Computer device 800 can be a personal computer (PC), a set-top box (STB), a server, a network router, switch or bridge, or any device capable of executing a set of instructions (sequential or otherwise) that specify actions to be taken by that device. Further, while only a single example computer device is illustrated, the term "computer" shall also be taken to include any collection of computers that individually or jointly execute a set (or multiple sets) of instructions to perform any one or more of the methods discussed herein.

Example computer device 800 can include a processing device 802 (also referred to as a processor or CPU), a main memory 804 (e.g., read-only memory (ROM), flash memory, dynamic random access memory (DRAM) such as synchronous DRAM (SDRAM), etc.), a static memory 806 (e.g., flash memory, static random access memory (SRAM), etc.), and a secondary memory (e.g., a data storage device 818), which can communicate with each other via a bus 830.

Processing device 802 (which can include processing logic 803) represents one or more general-purpose processing devices such as a microprocessor, central processing unit, or the like. More particularly, processing device 802 can be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 802 can also be one or more special-purpose processing devices such as an application specific integrated circuit (ASIC), a field programmable gate array (FPGA), a digital signal processor (DSP), network processor, or the like. In accordance with one or more aspects of the present disclosure, processing device 802 can be configured to execute instructions performing method 700 of deploying an E2E perception model for detection and navigation of RDAs in driving environments.

Example computer device 800 can further comprise a network interface device 808, which can be communicatively coupled to a network 820. Example computer device 800 can further comprise a video display 810 (e.g., a liquid crystal display (LCD), a touch screen, or a cathode ray tube (CRT)), an alphanumeric input device 812 (e.g., a keyboard), a cursor control device 814 (e.g., a mouse), and an acoustic signal generation device 816 (e.g., a speaker).

Data storage device 818 can include a computer-readable storage medium (or, more specifically, a non-transitory computer-readable storage medium) 828 on which is stored one or more sets of executable instructions 822. In accordance with one or more aspects of the present disclosure, executable instructions 822 can comprise executable instructions performing method 700 of deploying an E2E perception model for detection and navigation of RDAs in driving environments.

Executable instructions 822 can also reside, completely or at least partially, within main memory 804 and/or within processing device 802 during execution thereof by example computer device 800, main memory 804 and processing device 802 also constituting computer-readable storage media. Executable instructions 822 can further be transmitted or received over a network via network interface device 808.

While the computer-readable storage medium 828 is shown in **FIG. 8** as a single medium, the term "computer-readable storage medium" should be taken to include a single medium or multiple media (e.g., a centralized or distributed database, and/or associated caches and servers) that store the one or more sets of operating instructions. The term "computer-readable storage medium" shall also be taken to include any medium that is capable of storing or encoding a set of instructions for execution by the machine that cause the machine to perform any one or more of the methods described herein. The term "computer-readable storage medium" shall accordingly be taken to include, but not be limited to, solid-state memories, and optical and magnetic media.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "identifying," "determining," "storing," "adjusting," "causing," "returning," "comparing," "creating," "stopping," "loading," "copying," "throwing," "replacing," "performing," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Examples of the present disclosure also relate to an apparatus for performing the methods described herein. This apparatus can be specially constructed for the required purposes, or it can be a general purpose computer system selectively programmed by a computer program stored in the computer system. Such a computer program can be stored in a computer readable storage medium, such as, but not limited to, any type of disk including optical disks, CD-ROMs, and magnetic-optical disks, read-only memories (ROMs), random access memories (RAMs), EPROMs, EEPROMs, magnetic disk storage media, optical storage media, flash memory devices, other type of machine-accessible storage media, or any type of media suitable for storing electronic instructions, each coupled to a computer system bus.

The methods and displays presented herein are not inherently related to any particular computer or other apparatus. Various general purpose systems can be used with programs in accordance with the teachings herein, or it may prove convenient to construct a more specialized apparatus to perform the required method steps. The required structure for a variety of these systems will appear as set forth in the description below. In addition, the scope of the present disclosure is not limited to any particular programming language. It will be appreciated that a variety of programming languages can be used to implement the teachings of the present disclosure.

It is to be understood that the above description is intended to be illustrative, and not restrictive. Many other implementation examples will be apparent to those of skill in the art upon reading and understanding the above description. Although the present disclosure describes specific examples, it will be recognized that the systems and methods of the present disclosure are not limited to the examples described herein, but can be practiced with modifications within the scope of the appended claims. Accordingly, the specification and drawings are to be regarded in an illustrative sense rather than a restrictive sense. The scope of the present disclosure should, therefore, be determined with reference to the appended claims, along with the full scope of equivalents to which such claims are entitled.

The specification includes the following subject-matter expressed in the form of clauses 1-20.

    1. A system comprising:

a sensing system of a vehicle, the sensing system configured to acquire a first sensing data associated with a first set of times, wherein the first sensing data comprises:

a first set of camera images of an environment,
a first set of radar images of the environment, and
a first set of lidar images of the environment; and
a data processing system of the vehicle, the data processing system configured to:

generate, using a first neural network (NN), one or more camera features characterizing the first set of camera images,
generate, using a second NN, one or more radar features characterizing the first set of radar images;
generate, using a third NN, one or more lidar features characterizing the first set of lidar images; and
process the one or more camera features, the one or more radar features, and the one or more lidar features to obtain an indication of a reduced drivability area (RDA) in the environment.

2. The system of clause 1, wherein the indication of the RDA comprises a plurality of elements, each element of the plurality of elements mapped to a corresponding region of a plurality of regions of the environment and associated with a likelihood that a respective region of the plurality of regions belongs to the RDA.

3. The system of clause 1 or 2, wherein to generate the one or more camera features, the data processing system is configured to:
map the one or more camera features from a perspective coordinate system to a coordinate system associated with a ground surface.

4. The system of any of clauses 1-3, wherein to process the one or more camera features, the one or more radar features, and the one or more lidar features, the data processing system is configured to:
process the one or more camera features, the one or more radar features, and the one or more lidar features using a backbone NN and one or more classification heads.

5. The system of clause 4, wherein the one or more camera features comprise a time series of camera features, the one or more radar features comprise a time series of radar features, and the one or more lidar features comprise a time series of lidar features, and wherein to process the one or more camera features, the one or more radar features, and the one or more lidar features, the data processing system is configured to:
concurrently process, using the backbone NN, the time series of camera features, the time series of radar features, and the time series of lidar features.

6. The system of clause 4 or 5, wherein the first NN, the second NN, the third NN, the backbone NN, and the one or more classification heads are trained together.

7. The system of any of clauses 4-6, wherein the one or more classification heads comprise a driving trajectory classification head that outputs a target trajectory for the vehicle, wherein the target trajectory avoids the RDA.

8. The system of clause 7, wherein the driving trajectory classification head, the backbone NN and one or more of the first NN, the second NN, or the second NN are trained using ground truth comprising one or more trajectories of a human-operated vehicle navigating respective one or more historical driving missions each comprising at least one RDA.

9. The system of any of clauses 4-8, wherein the first NN, the second NN, the third NN, the backbone NN, and the one or more classification heads are trained using one or more dropout training epochs, each dropout training epoch having an output of at least one of the first NN, the second NN, or the third NN replaced with a null output.

10. The system of any of clauses 1-9, wherein the sensing system is further configured to acquire a second sensing data associated with a second set of times, wherein the second sensing data comprises:

a fourth set of camera images of the environment,
a fifth set of radar images of the environment, and
a sixth set of lidar images of the environment and wherein the data processing system is further configured to:

generate, using the first NN, one or more additional camera features characterizing the fourth set of camera images,
generate, using the second NN, one or more additional radar features characterizing the fifth set of radar images;
generate, using the third NN, one or more additional lidar features characterizing the sixth set of lidar images;
process the one or more additional camera features, the one or more additional radar features, and the one or more additional lidar features to obtain an additional indication of the RDA; and
process the indication of the RDA and the additional indication of the RDA to obtain a time-smoothed indication of the RDA.

11. The system of any of clauses 1-10, wherein to obtain the indication of the RDA, the data processing system is configured to:

obtain a set of prospective indications of the RDA; and
eliminate one or more duplicate indications of the RDA from the set of prospective indications of the RDA to obtain the indication of the RDA.

12. The system of any of clauses 1-11, wherein the vehicle is an autonomous vehicle, and
wherein the data processing system is further configured to:
cause a driving control system of the autonomous vehicle to select a driving path of the autonomous vehicle in view of the indication of the RDA.

13. A method comprising:
obtaining, using a sensing system of a vehicle, first sensing data associated with a first set of times, the first sensing data comprising:

a first set of camera images of an environment,
a second set of radar images of the environment, and
a third set of lidar images of the environment; and
generating, using a first neural network (NN), one or more camera features characterizing the first set of camera images,
generating, using a second NN, one or more radar features characterizing the second set of radar images;
generating, using a third NN, one or more lidar features characterizing the third set of lidar images; and
processing the one or more camera features, the one or more radar features, and the one or more lidar features to obtain an indication of a reduced drivability area (RDA) in the environment.

14. The method of clause 13, wherein the indication of the RDA comprises a plurality of elements, each element of the plurality of elements mapped to a corresponding region of a plurality of regions of the environment and associated with a likelihood that a respective region of the plurality of regions belongs to the RDA.

15. The method of clause 13 or 14, wherein processing the one or more camera features, the one or more radar features, and the one or more lidar features comprises:

processing the one or more camera features, the one or more radar features, and the one or more lidar features using a backbone NN and one or more classification heads, wherein the first NN,
the second NN, the third NN, the backbone NN, and the one or more classification heads are trained together.

16. The method of clause 15, wherein the one or more classification heads comprise a driving trajectory classification head that outputs a target trajectory for the vehicle, wherein the target trajectory avoids the RDA, and wherein the driving trajectory classification head, the backbone NN and one or more of the first NN, the second NN, or the second NN are trained using ground truth comprising one or more trajectories of a human-operated vehicle navigating respective one or more historical driving missions each comprising at least one RDA.

17. The method of clause 15 or 16, wherein the first NN, the second NN, the third NN, the backbone NN, and the one or more classification heads are trained using one or more dropout training epochs, each dropout training epoch having an output of at least one of the first NN, the second NN, or the third NN replaced with a null output.

18. The method of any of clauses 13-17, further comprising:
obtaining, using the sensing system of a vehicle, a second sensing data associated with a second set of times, the second sensing data comprising:

a fourth set of camera images of an environment,
a fifth set of radar images of the environment, and
a sixth set of lidar images of the environment; and
generating, using the first NN, one or more additional camera features characterizing the fourth set of camera images,
generating, using the second NN, one or more additional radar features characterizing the fifth set of radar images;
generating, using the third NN, one or more additional lidar features characterizing the sixth set of lidar images;
processing the one or more additional camera features, the one or more additional radar features, and the one or more additional lidar features to obtain an additional indication of the RDA;
processing the indication of the RDA and the additional indication of the RDA to obtain a time-smoothed indication of the RDA; and
associating the time-smoothed indication of the RDA with a roadmap to identify one or more driving lanes, mapped in the roadmap, that are blocked to traffic.

19. The method of any of clauses 13-18, wherein the vehicle is an autonomous vehicle, the method further comprising:
causing a driving control system of the autonomous vehicle to select a driving path of the autonomous vehicle in view of the indication of the RDA.

20. An autonomous vehicle comprising:

a sensing system configured to acquire sensing data of a plurality of sensing modalities, wherein the plurality of sensing modalities is selected from at least a camera sensing modality, a radar sensing modality, or a radar sensing modality;
a data processing system configured to:

generate, using a first neural network (NN), one or more first features characterizing sensing data of a first sensing modality, generate, using a second NN, one or more second features characterizing sensing data of a second sensing modality; and process, using a third neural network, the one or more first features and one or more second features, to obtain an indication of a reduced drivability area (RDA) in an environment of the autonomous vehicle, wherein the first NN, the second NN, and the third NN are trained together using training data of each sensing modality of the plurality of sensing modalities; and

a driving control system configured to:
select a driving path of the autonomous vehicle in view of the indication of the RDA.

**Claims**

1. A system comprising:

a sensing system of a vehicle, the sensing system configured to acquire a first sensing data associated with a first set of times, wherein the first sensing data comprises:

a first set of camera images of an environment,
a first set of radar images of the environment, and
a first set of lidar images of the environment; and

a data processing system of the vehicle, the data processing system configured to:

generate, using a first neural network (NN), one or more camera features characterizing the first set of camera images,
generate, using a second NN, one or more radar features characterizing the first set of radar images;
generate, using a third NN, one or more lidar features characterizing the first set of lidar images; and
process the one or more camera features, the one or more radar features, and the one or more lidar features to obtain an indication of a reduced drivability area (RDA) in the environment.

2. The system of claim 1, wherein the indication of the RDA comprises a plurality of elements, each element of the plurality of elements mapped to a corresponding region of a plurality of regions of the environment and associated with a likelihood that a respective region of the plurality of regions belongs to the RDA.

3. The system of claim 1 or 2, wherein to generate the one or more camera features, the data processing system is configured to:
map the one or more camera features from a perspective coordinate system to a coordinate system associated with a ground surface.

4. The system of any of claims 1-3, wherein to process the one or more camera features, the one or more radar features, and the one or more lidar features, the data processing system is configured to:
process the one or more camera features, the one or more radar features, and the one or more lidar features using a backbone NN and one or more classification heads.

5. The system of claim 4, wherein the one or more camera features comprise a time series of camera features, the one or more radar features comprise a time series of radar features, and the one or more lidar features comprise a time series of lidar features, and wherein to process the one or more camera features, the one or more radar features, and the one or more lidar features, the data processing system is configured to:
concurrently process, using the backbone NN, the time series of camera features, the time series of radar features, and the time series of lidar features;

and/or wherein the first NN, the second NN, the third NN, the backbone NN, and the one or more classification heads are trained together;
and/or wherein the first NN, the second NN, the third NN, the backbone NN, and the one or more classification heads are trained using one or more dropout training epochs, each dropout training epoch having an output of at least one of the first NN, the second NN, or the third NN replaced with a null output.

6. The system of claim 4 or 5, wherein the one or more classification heads comprise a driving trajectory classification head that outputs a target trajectory for the vehicle, wherein the target trajectory avoids the RDA.

7. The system of claim 6, wherein the driving trajectory classification head, the backbone NN and one or more of the first NN, the second NN, or the second NN are trained using ground truth comprising one or more trajectories of a human-operated vehicle navigating respective one or more historical driving missions each comprising at least one RDA.

8. The system of any of claims 1-7, wherein the sensing system is further configured to acquire a second sensing data associated with a second set of times, wherein the second sensing data comprises:

a fourth set of camera images of the environment,
a fifth set of radar images of the environment, and
a sixth set of lidar images of the environment and

wherein the data processing system is further configured to:

generate, using the first NN, one or more additional camera features characterizing the fourth set of camera images,
generate, using the second NN, one or more additional radar features characterizing the fifth set of radar images;
generate, using the third NN, one or more additional lidar features characterizing the sixth set of lidar images;
process the one or more additional camera features, the one or more additional radar features, and the one or more additional lidar features to obtain an additional indication of the RDA; and
process the indication of the RDA and the additional indication of the RDA to obtain a time-smoothed indication of the RDA.

9. The system of any of claims 1-8, wherein to obtain the indication of the RDA, the data processing system is configured to:

obtain a set of prospective indications of the RDA; and
eliminate one or more duplicate indications of the RDA from the set of prospective indications of the RDA to obtain the indication of the RDA.

10. The system of any of claims 1-9, wherein the vehicle is an autonomous vehicle, and wherein the data processing system is further configured to:
cause a driving control system of the autonomous vehicle to select a driving path of the autonomous vehicle in view of the indication of the RDA.

11. A method comprising:

obtaining, using a sensing system of a vehicle, first sensing data associated with a first set of times, the first sensing data comprising:

a first set of camera images of an environment,
a second set of radar images of the environment, and
a third set of lidar images of the environment; and

generating, using a first neural network (NN), one or more camera features characterizing the first set of camera images,
generating, using a second NN, one or more radar features characterizing the second set of radar images;
generating, using a third NN, one or more lidar features characterizing the third set of lidar images; and
processing the one or more camera features, the one or more radar features, and the one or more lidar features to obtain an indication of a reduced drivability area (RDA) in the environment.

12. The method of claim 11,

wherein the indication of the RDA comprises a plurality of elements, each element of the plurality of elements mapped to a corresponding region of a plurality of regions of the environment and associated with a likelihood that a respective region of the plurality of regions belongs to the RDA; and/or
wherein the vehicle is an autonomous vehicle, the method further comprising:
causing a driving control system of the autonomous vehicle to select a driving path of the autonomous vehicle in view of the indication of the RDA.

13. The method of claim 11 or 12, wherein processing the one or more camera features, the one or more radar features, and the one or more lidar features comprises:

processing the one or more camera features, the one or more radar features, and the one or more lidar features using a backbone NN and one or more classification heads, wherein the first NN, the second NN, the third NN, the backbone NN, and the one or more classification heads are trained together; optionally wherein:

the one or more classification heads comprise a driving trajectory classification head that outputs a target trajectory for the vehicle, wherein the target trajectory avoids the RDA, and wherein the driving trajectory classification head, the backbone NN and one or more of the first NN, the second NN, or the second NN are trained using ground truth comprising one or more trajectories of a human-operated vehicle navigating respective one or more historical driving missions each comprising at least one RDA; and/or the first NN, the second NN, the third NN, the backbone NN, and the one or more classification heads are trained using one or more dropout training epochs, each dropout training epoch having an output of at least one of the first NN, the second NN, or the third NN replaced with a null output.

14. The method of any of claims 11-13, further comprising:

obtaining, using the sensing system of a vehicle, a second sensing data associated with a second set of times, the second sensing data comprising:

a fourth set of camera images of an environment, a fifth set of radar images of the environment, and a sixth set of lidar images of the environment; and

generating, using the first NN, one or more additional camera features characterizing the fourth set of camera images, generating, using the second NN, one or more additional radar features characterizing the fifth set of radar images; generating, using the third NN, one or more additional lidar features characterizing the sixth set of lidar images; processing the one or more additional camera features, the one or more additional radar features, and the one or more additional lidar features to obtain an additional indication of the RDA; processing the indication of the RDA and the additional indication of the RDA to obtain a time-smoothed indication of the RDA; and associating the time-smoothed indication of the RDA with a roadmap to identify one or more driving lanes, mapped in the roadmap, that are blocked to traffic.

15. An autonomous vehicle comprising:

a sensing system configured to acquire sensing data of a plurality of sensing modalities, wherein the plurality of sensing modalities is selected from at least a camera sensing modality, a radar sensing modality, or a radar sensing modality; a data processing system configured to:

generate, using a first neural network (NN), one or more first features characterizing sensing data of a first sensing modality, generate, using a second NN, one or more second features characterizing sensing data of a second sensing modality; and process, using a third neural network, the one or more first features and one or more second features, to obtain an indication of a reduced drivability area (RDA) in an environment of the autonomous vehicle, wherein the first NN, the second NN, and the third NN are trained together using training data of each sensing modality of the plurality of sensing modalities; and

a driving control system configured to: select a driving path of the autonomous vehicle in view of the indication of the RDA.

100

**Driving Environment**
**101**

**Sensing System 110**

| Radar 112 | Lidar 114 | Microphone Sensor(s) 116 | Camera(s) 118 | IR Sensor(s) 119 |

**Data Processing System 120**

RDA Detection Model 132

Perception and Planning System 130

Positioning Subsystem 122

Map Info 124

**Vehicle Control System (VCS) 140**

| Powertrain, Brakes & Steering 150 | Vehicle Electronics 160 | Signaling 170 |

# FIG. 1

FIG. 2

EP 4 624 980 A1

FIG. 3A

**FIG. 3B**

FIG. 4

FIG. 5

FIG. 6

**FIG. 7**

700

Obtain camera images, radar mages, and lidar images of an environment 710

↓

Generate, using 1st neural network (NN), camera feature(s) characterizing camera images 720

↓

Generate, using 2nd NN, radar feature(s) characterizing radar images 730

↓

Generate, using 3rd NN, lidar feature(s) characterizing lidar images 740

↓

Process the camera feature(s), the radar feature(s), and the lidar feature(s) to obtain an indication of a reduced drivability (RDA) area in the environment 750

↓

Cause a driving control to select a driving path in view of the indication of the RDA 760

Map the camera feature(s) from a perspective coordinate system to a coordinate system associated with a ground surface 722

Process (e.g., concurrently) the camera feature(s), the radar feature(s), and the lidar features using a backbone NN and classification heads 752

↓

Obtain a time-smoothed indication of RDA 754

↓

Eliminate duplicate indications of RDA 756

800

| Processing Device 802 | | Video Display 810 |

Processing Logic 803

| Main Memory 804 | | Alpha-Numeric Input Device 812 |

Instructions 822

830

| Static Memory 806 | | Cursor Control Device 814 |

| Network Interface Device 808 | | Signal Generation Device 816 |

Network 820

| Data Storage Device 818 |

Computer-Readable Storage Medium 828

Instructions 822

**FIG. 8**

**EP 4 624 980 A1**

Europäisches
Patentamt

European
Patent Office

Office européen
des brevets

# EUROPEAN SEARCH REPORT

**Application Number**

EP 25 16 5999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/294687 A1 (PHILBIN JAMES [US] ET AL) 21 September 2023 (2023-09-21) <br> * figures 1,2 * <br> * paragraph [0023] - paragraph [0039] * <br> * paragraph [0044] * <br> * paragraph [0053] - paragraph [0057] * <br> * paragraph [0060] - paragraph [0067] * <br> - - - - - | 1-15 | INV. <br> G01S7/41 <br> G01S13/86 <br> G01S13/931 <br> G01S17/86 <br> G01S17/931 <br> G06N3/045 |
| X | DE 10 2018 209595 A1 (BOSCH GMBH ROBERT [DE]) 19 December 2019 (2019-12-19) <br> * paragraph [0005] - paragraph [0016]; figure 1 * <br> - - - - - | 1-4, 7-12,14 | ADD. <br> G06N3/08 <br> G06V10/82 <br> G06V20/58 |

TECHNICAL FIELDS
SEARCHED        (IPC)

G01S
G06N
G06V

The present search report has been drawn up for all claims

| Place of search | Date of completion of the search | Examiner |
|---|---|---|
| Munich | 29 July 2025 | Heiß, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 16 5999

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2025

| Patent document cited in search report | Publication date | Patent family member(s) | | Publication date |
|---|---|---|---|---|
| US 2023294687 A1 | 21-09-2023 | EP | 4460715 A1 | 13-11-2024 |
| | | US | 2023294687 A1 | 21-09-2023 |
| | | WO | 2023158706 A1 | 24-08-2023 |
| DE 102018209595 A1 | 19-12-2019 | CN | 112204418 A | 08-01-2021 |
| | | DE | 102018209595 A1 | 19-12-2019 |
| | | WO | 2019238367 A1 | 19-12-2019 |

EPO FORM P0459

For more details about this annex : see Official Journal of the European Patent Office, No. 12/82